(19) Europäisches Patentamt
European Patent Office
Office européen des brevets

(11) EP 3 547 564 A1

(12) EUROPEAN PATENT APPLICATION
published in accordance with Art. 153(4) EPC

(43) Date of publication:
**02.10.2019 Bulletin 2019/40**

(21) Application number: **18833374.4**

(22) Date of filing: **27.12.2018**

(51) Int Cl.:
***H04B 7/06*** *(2006.01)* ***H04W 24/10*** *(2009.01)*
***H04W 72/04*** *(2009.01)* ***H04L 5/00*** *(2006.01)*

(86) International application number:
**PCT/KR2018/016745**

(87) International publication number:
**WO 2019/139288 (18.07.2019 Gazette 2019/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.01.2018 US 201862615971 P**

(71) Applicant: **LG Electronics Inc.**
**Seoul 07336 (KR)**

(72) Inventors:
- **PARK, Haewook**
  **Seoul 06772 (KR)**
- **KANG, Jiwon**
  **Seoul 06772 (KR)**
- **KIM, Youngtae**
  **Seoul 06772 (KR)**
- **YUM, Kunil**
  **Seoul 06772 (KR)**
- **HWANG, Daesung**
  **Seoul 06772 (KR)**

(74) Representative: **Maikowski & Ninnemann Patentanwälte Partnerschaft mbB**
**Postfach 15 09 20**
**10671 Berlin (DE)**

# (54) METHOD FOR REPORTING CHANNEL STATE INFORMATION IN WIRELESS COMMUNICATION SYSTEM AND APPARATUS THEREFOR

(57) Provided are a method and apparatus for reporting channel state information (CSI) by a user equipment in a wireless communication system. A user equipment may receive first configuration information related to the reporting of CSI from a base station receive, and may report CSI to the base station based on the first configuration information. In this case, the first configuration information includes resource configuration information related to a physical uplink shared channel (PUCCH) resource for reporting the CSI. The PUCCH resource may be configured for each of at least one bandwidth part (BWP) activated for the reporting of the CSI.

Fig. 13

Start
Receive first configuration information related to reporting of CSI from base station
S13010
Report CSI to base station based on first configuration information
S13020
End



Printed by Jouve, 75001 PARIS (FR)

**Description**

## BACKGROUND OF THE INVENTION

### Field of the invention

The present invention relates to a wireless communication system, and more particularly, to a method for transmitting and receiving channel state information in a wireless communication system and an apparatus therefor.

### Related Art

Mobile communication systems have been generally developed to provide voice services while guaranteeing user mobility. Such mobile communication systems have gradually expanded their coverage from voice services through data services up to high-speed data services. However, as current mobile communication systems suffer resource shortages and users demand even higher-speed services, development of more advanced mobile communication systems is needed.

The requirements of the next-generation mobile communication system may include supporting huge data traffic, a remarkable increase in the transfer rate of each user, the accommodation of a significantly increased number of connection devices, very low end-to-end latency, and high energy efficiency. To this end, various techniques, such as small cell enhancement, dual connectivity, massive multiple input multiple output (MIMO), in-band full duplex, non-orthogonal multiple access (NOMA), supporting super-wide band, and device networking, have been researched.

## SUMMARY OF THE INVENTION

The present invention provides a method and apparatus for transmitting and receiving channel status information (CSI)-reference signals (RS) in a wireless communication system.

Furthermore, the present invention provides a method and apparatus for changing a corresponding configuration value when a bandwidth part (BWP) or numerology for the reporting of CSI is changed.

Furthermore, the present invention provides a method and apparatus for configuring a resource for the reporting of CSI according to a bandwidth part.

Technical objects to be achieved in this specification are not limited to the above-described technical objects, and other technical objects not described above may be evidently understood by a person having ordinary skill in the art to which the present invention pertains from the following description.

In an aspect, a method for reporting channel state information (CSI) in a wireless communication system includes receiving first configuration information related to the reporting of the CSI from a base station and reporting the CSI to the base station based on the first configuration information. Te first configuration information includes resource configuration information related to a physical uplink shared channel (PUCCH) resource for reporting the CSI, and the PUCCH resource is configured for each of at least one uplink bandwidth part (UL BWP).

Furthermore, in one embodiment, the CSI is reported via the PUCCH resource in one activated UL BWP among the at least one UL BWP.

Furthermore, in one embodiment, the first configuration information includes configuration values for reporting the CSI in one activated UL BWP among the at least one UL BWP, and the configuration values comprise at least one of a period or an offset.

Furthermore, in one embodiment, at least one of the configuration values of periodic and/or semi-persistent reporting related to the CSI reporting of the one activated UL BWP or numerology is deactivated, when at least one of the one activated UL BWP or the numerology for the reporting of the CSI is changed.

Furthermore, the method further includes receiving second configuration information including re-configuration values for the periodic and/or the semi-persistent reporting related to the CSI reporting of the one activated UL BWP or the numerology.

Furthermore, in one embodiment, at least one of the configuration values of periodic and/or semi-persistent reporting related to the CSI reporting of the one activated UL BWP or numerology the CSI is configured to a predetermined value, when at least one of the one activated UL BWP or the numerology for the reporting of the CSI is changed.

Furthermore, in one embodiment, the first configuration information includes a plurality of configuration values for each of the at least one UL BWP. At least one of the configuration values of periodic and/or semi-persistent reporting related to the CSI reporting of the one activated UL BWP or numerology the CSI is configured according to the plurality of configuration values, when at least one of the one activated UL BWP or the numerology for the reporting of the CSI is changed.

Furthermore, in another aspect, a user equipment for reporting channel state information (CSI) in a wireless communication system includes a radio frequency (RF) module transmitting and receiving a radio signal and a processor controlling the RF module. The processor is configured to receive first configuration information related to the reporting of the CSI from a base station, and report the CSI to the base station based on the first configuration information. The first configuration information includes resource configuration information related to a physical uplink shared channel (PUCCH) resource for reporting the CSI. The PUCCH resource is configured for each of at least one uplink bandwidth part (UL BWP).

Furthermore, in another aspect, a base station for reporting channel state information (CSI) in a wireless communication system includes a radio frequency (RF) module transmitting and receiving a radio signal and a processor controlling the RF module. The processor is configured to transmit first configuration information related to the reporting of the CSI from a base station and receive the CSI to the base station based on the first configuration information. The first configuration information includes resource configuration information related to a physical uplink shared channel (PUCCH) resource for reporting the CSI. The PUCCH resource is configured for each of at least one uplink bandwidth part (UL BWP).

## BRIEF DESCRIPTION OF THE DRAWINGS

In order to help understanding of the present invention, the accompanying drawings which are included as a part of the Detailed Description provide embodiments of the present invention and describe the technical features of the present invention together with the Detailed Description.

FIG. 1 is a diagram illustrating an example of an overall system structure of NR to which a method proposed in the present specification may be applied.
FIG. 2 illustrates a relationship between an uplink frame and a downlink frame in a wireless communication system to which the method proposed in the present specification may be applied.
FIG. 3 illustrates an example of a resource grid supported in the wireless communication system to which the method proposed in the present specification may be applied.
FIG. 4 is a diagram illustrating a self-contained subframe structure in the wireless communication system to which the method proposed in the present specification may be applied.
FIG. 5 illustrates a transceiver unit model in the wireless communication system to which the method proposed in the present specification may be applied.
FIG. 6 is a diagram illustrating a hybrid beamforming structure in terms of TXRU and a physical antenna in the wireless communication system to which the method proposed in the present specification may be applied.
FIG. 7 is a diagram illustrating an example of a beam sweeping operation to which the method proposed in the present specification may be applied.
FIG. 8 is a diagram illustrating an example of an antenna array to which the method proposed in the present specification may be applied.
FIG. 9 is a flowchart illustrating an example of a CSI related procedure to which the method proposed in the present specification may be applied.
FIG. 10 illustrates an example of an information payload of PUSCH based CSI reporting.
FIG. 11 illustrates an example of an information payload of short PUCCH based CSI reporting.
FIG. 12 illustrates an example of an information payload of long PUCCH based CSI reporting.
FIG. 13 is a flowchart showing an example of a CSI reporting procedure of a user equipment to which methods proposed in this specification may be applied.
FIG. 14 is a flowchart showing an example of a procedure for a base station to receive CSI reporting from a user equipment, to which methods proposed in this specification may be applied.
FIG. 15 illustrates a block diagram of a wireless communication apparatus to which methods proposed in this specification may be applied.
FIG. 16 illustrates a block diagram of a communication apparatus according to an embodiment of the present invention.
FIG. 17 is a diagram showing an example of the RF module of a wireless communication apparatus to which a method proposed in this specification may be applied.
FIG. 18 is a diagram showing another example of the RF module of a wireless communication apparatus to which a method proposed in this specification may be applied.

## DESCRIPTION OF EXEMPLARY EMBODIMENTS

Some embodiments of the present disclosure are described in detail with reference to the accompanying drawings. A detailed description to be disclosed along with the accompanying drawings is intended to describe some exemplary embodiments of the present disclosure and is not intended to describe a sole embodiment of the present disclosure. The following detailed description includes more details in order to provide full understanding of the present disclosure. However, those skilled in the art will understand that the present disclosure may be implemented without such more details.

In some cases, in order to avoid making the concept of the present disclosure vague, known structures and devices are omitted or may be shown in a block diagram form based on the core functions of each structure and device.

In the present disclosure, a base station has the meaning of a terminal node of a network over which the base station directly communicates with a terminal. In this document, a specific operation that is described to be performed by a base station may be performed by an upper node of the base station according to circumstances. That is, it is evident that in a network including a plurality of network nodes including a base station, various operations performed for communication with a terminal may be performed by the base station or other network nodes other than the base station. The base station (BS) may be substituted with another term, such as a fixed station, a Node B, an evolved-NodeB (eNB), a base transceiver system (BTS), or an access point (AP). Furthermore, the terminal may be fixed or may have mobility and may be substituted with another term, such as a user equipment (UE), a mobile station (MS), a user terminal (UT), a mobile subscriber station (MSS), a subscriber station (SS), an advanced mobile station (AMS), a wireless terminal (WT), a machine-type communication (MTC) device, a machine-to-Machine (M2M) device, or a device-to-device (D2D) device.

Hereinafter, downlink (DL) means communication from a base station to UE, and uplink (UL) means communication from UE to a base station. In DL, a transmitter may be part of a base station, and a receiver may be part of UE. In UL, a transmitter may be part of UE, and a receiver may be part of a base station.

Specific terms used in the following description have been provided to help understanding of the present disclosure, and the use of such specific terms may be changed in various forms without departing from the technical sprit of the present disclosure.

The following technologies may be used in a variety of wireless communication systems, such as code division multiple access (CDMA), frequency division multiple access (FDMA), time division multiple access (TDMA), orthogonal frequency division multiple access (OFDMA), single carrier frequency division multiple access (SC-FDMA), and non-orthogonal multiple access (NOMA). CDMA may be implemented using a radio technology, such as universal terrestrial radio access (UTRA) or CDMA2000. TDMA may be implemented using a radio technology, such as global system for mobile communications (GSM)/general packet radio service (GPRS)/enhanced data rates for GSM evolution (EDGE). OFDMA may be implemented using a radio technology, such as Institute of electrical and electronics engineers (IEEE) 802.11 (Wi-Fi), IEEE 802.16 (WiMAX), IEEE 802.20, or evolved UTRA (E-UTRA). UTRA is part of a universal mobile telecommunications system (UMTS). 3rd generation partnership project (3GPP) Long term evolution (LTE) is part of an evolved UMTS (E-UMTS) using evolved UMTS terrestrial radio access (E-UTRA), and it adopts OFDMA in downlink and adopts SC-FDMA in uplink. LTE-advanced (LTE-A) is the evolution of 3GPP LTE.

Furthermore, 5G new radio (NR) defines an enhanced Mobile Broadband (eMBB), massive machine type communications (mMTC), ultra-reliable and low latency communications (URLLC), and vehicle-to-everything (V2X) depending on a usage scenario.

Furthermore, the 5G NR standard is divided into standalone (SA) and non-standalone (NSA) depending co-existence between an NR system and an LTE system.

Furthermore, the 5G NR supports various subcarrier spacings, and supports CP-OFDM in downlink and CP-OFDM 및 DFT-s-OFDM (SC-OFDM) in uplink.

Embodiments of the present disclosure may be supported by the standard documents disclosed in at least one of IEEE 802, 3GPP, and 3GPP2, that is, radio access systems. That is, steps or portions that belong to the embodiments of the present disclosure and that are not described in order to clearly expose the technical spirit of the present disclosure may be supported by the documents. Furthermore, all terms disclosed in this document may be described by the standard documents.

In order to more clarify a description, 3GPP LTE/LTE-A is chiefly described, but the technical characteristics of the present disclosure are not limited thereto.

## Definition of terms

eLTE eNB: An eLTE eNB is an evolution of an eNB that supports a connection for an EPC and an NGC.

gNB: A node for supporting NR in addition to a connection with an NGC

New RAN: A radio access network that supports NR or E-UTRA or interacts with an NGC

Network slice: A network slice is a network defined by an operator so as to provide a solution optimized for a specific market scenario that requires a specific requirement together with an inter-terminal range.

Network function: A network function is a logical node in a network infra that has a well-defined external interface and a well-defined functional operation.

NG-C: A control plane interface used for NG2 reference point between new RAN and an NGC

NG-U: A user plane interface used for NG3 reference point between new RAN and an NGC

Non-standalone NR: A deployment configuration in which a gNB requires an LTE eNB as an anchor for a control plane connection to an EPC or requires an eLTE eNB as an anchor for a control plane connection to an NGC

Non-standalone E-UTRA: A deployment configuration an eLTE eNB requires a gNB as an anchor for a control plane connection to an NGC.

User plane gateway: A terminal point of NG-U interface

## General system

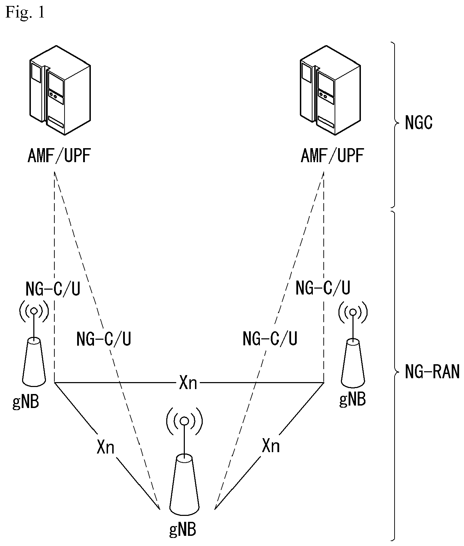

FIG. 1 is a diagram illustrating an example of an overall structure of a new radio (NR) system to which a method proposed by the present disclosure may be implemented.

Referring to FIG. 1, an NG-RAN is composed of gNBs that provide an NG-RA user plane (new AS sublayer/PDCP/RLC/MAC/PHY) and a control plane (RRC) protocol terminal for a UE (User Equipment).

The gNBs are connected to each other via an Xn interface.

The gNBs are also connected to an NGC via an NG interface.

More specifically, the gNBs are connected to a Access and Mobility Management Function (AMF) via an N2 interface and a User Plane Function (UPF) via an N3 interface.

## New Rat (NR) Numerology and frame structure

In the NR system, multiple numerologies may be supported. The numerologies may be defined by subcarrier spacing and a cyclic prefix (CP) overhead. Spacing between the plurality of subcarriers may be derived by scaling basic subcarrier spacing into an integer N (or $\mu$). In addition, although a very low subcarrier spacing is assumed not to be used at a very high subcarrier frequency, a numerology to be used may be selected independent of a frequency band.

In addition, in the NR system, a variety of frame structures according to the multiple numerologies may be supported.

Hereinafter, an orthogonal frequency division multiplexing (OFDM) numerology and a frame structure, which may be considered in the NR system, will be described.

A plurality of OFDM numerologies supported in the NR system may be defined as in Table 1.

[Table 1]

| $\mu$ | $\Delta f = 2^{\mu} \cdot 15$[kHz] | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |
| 5 | 480 | Normal |

Regarding a frame structure in the NR system, a size of various fields in the time domain is expressed as a multiple of a time unit of $T_s = 1/(\Delta f_{max} \cdot N_f)$. In this case, $\Delta f_{max} = 480 \cdot 10^3$, and $N_f = 4096$. DL and UL transmission is configured as a radio frame having a section of $T_f = (\Delta f_{max} N_f/100) \cdot T_s = 10$ms. The radio frame is composed of ten subframes each having a section of $T_{sf} = (\Delta f_{max} N_f/1000) \cdot T_s = 1$ms. In this case, there may be a set of UL frames and a set of DL frames.

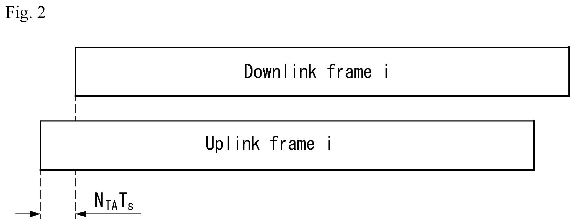

FIG. 2 illustrates a relationship between a UL frame and a DL frame in a wireless communication system to which a method proposed by the present disclosure may be implemented.

As illustrated in FIG. 2, a UL frame number I from a User Equipment (UE) needs to be transmitted $T_{TA} = N_{TA} T_s$ before the start of a corresponding DL frame in the UE.

Regarding the numerology $\mu$, slots are numbered in ascending order of $n_s^{\mu} \in \{0,..., N_{subframe}^{slots,\mu} - 1\}$ in a

subframe, and in ascending order of $n^{\mu}_{s,f} \in \{0,...,N^{slots,\mu}_{frame} - 1\}$ in a radio frame. One slot is composed of continuous OFDM symbols of $N^{\mu}_{symb}$, and $N^{\mu}_{symb}$ is determined depending on a numerology in use and slot configuration. The start of slots $n^{\mu}_{s}$ in a subframe is temporally aligned with the start of OFDM symbols $n^{\mu}_{s}N^{\mu}_{symb}$ in the same subframe.

Not all UEs are able to transmit and receive at the same time, and this means that not all OFDM symbols in a DL slot or an UL slot are available to be used.

Table 2 shows the number of OFDM symbols per slot for a normal CP in the numerology $\mu$, and Table 3 shows the number of OFDM symbols per slot for an extended CP in the numerology $\mu$.

[Table 2]

| $\mu$ | Slot configuration | | | | | |
|---|---|---|---|---|---|---|
| | 0 | | | 1 | | |
| | $N^{\mu}_{symb}$ | $N^{slots,\mu}_{frame}$ | $N^{slots,\mu}_{subframe}$ | $N^{\mu}_{symb}$ | $N^{slots,\mu}_{frame}$ | $N^{slots,\mu}_{subframe}$ |
| 0 | 14 | 10 | 1 | 7 | 20 | 2 |
| 1 | 14 | 20 | 2 | 7 | 40 | 4 |
| 2 | 14 | 40 | 4 | 7 | 80 | 8 |
| 3 | 14 | 80 | 8 | - | - | - |
| 4 | 14 | 160 | 16 | - | - | - |
| 5 | 14 | 320 | 32 | - | - | - |

[Table 3]

| $\mu$ | Slot configuration | | | | | |
|---|---|---|---|---|---|---|
| | 0 | | | 1 | | |
| | $N^{\mu}_{symb}$ | $N^{slots,\mu}_{frame}$ | $N^{slots,\mu}_{subframe}$ | $N^{\mu}_{symb}$ | $N^{slots,\mu}_{frame}$ | $N^{slots,\mu}_{subframe}$ |
| 0 | 12 | 10 | 1 | 6 | 20 | 2 |
| 1 | 12 | 20 | 2 | 6 | 40 | 4 |
| 2 | 12 | 40 | 4 | 6 | 80 | 8 |
| 3 | 12 | 80 | 8 | - | - | - |
| 4 | 12 | 160 | 16 | - | - | - |
| 5 | 12 | 320 | 32 | - | - | - |

## NR physical resource

Regarding physical resources in the NR system, an antenna port, a resource grid, a resource element, a resource block, a carrier part, etc. may be considered.

Hereinafter, the above physical resources possible to be considered in the NR system will be described in more detail.

First, regarding an antenna port, the antenna port is defined such that a channel over which a symbol on one antenna port is transmitted can be inferred from another channel over which a symbol on the same antenna port is transmitted. When large-scale properties of a channel received over which a symbol on one antenna port can be inferred from another channel over which a symbol on another antenna port is transmitted, the two antenna ports may be in a QC/QCL (quasi co-located or quasi co-location) relationship. Herein, the large-scale properties may include at least one of delay spread, Doppler spread, Doppler shift, average gain, and average delay.

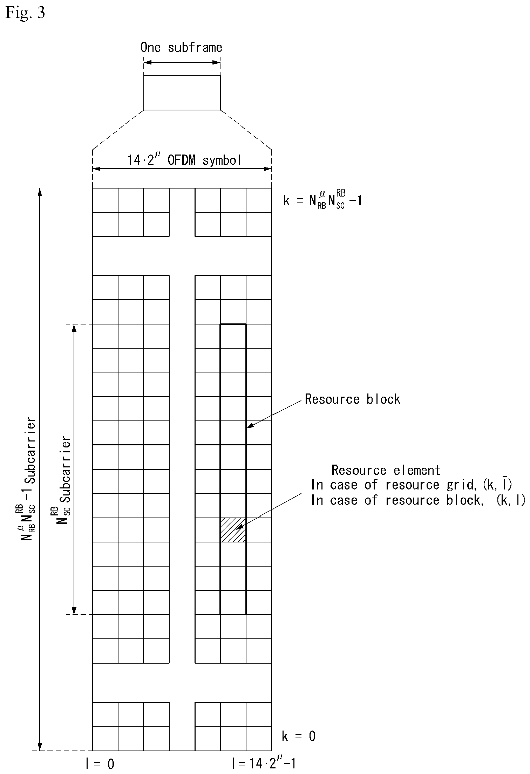

FIG. 3 illustrates an example of a resource grid supported in a wireless communication system to which a method proposed by the present disclosure may be implemented.

Referring to FIG. 3, a resource grid is composed of $N_{\mathrm{RB}}^{\mu} N_{\mathrm{sc}}^{\mathrm{RB}}$ subcarriers in a frequency domain, each subframe composed of 14·2μ OFDM symbols, but the present disclosure is not limited thereto.

In the NR system, a transmitted signal is described by one or more resource grids, composed of $N_{\mathrm{RB}}^{\mu} N_{\mathrm{sc}}^{\mathrm{RB}}$ subcarriers, and $2^{\mu} N_{\mathrm{symb}}^{(\mu)}$ OFDM symbols Herein, $N_{\mathrm{RB}}^{\mu} \leq N_{\mathrm{RB}}^{\max, \mu}$. The above $N_{\mathrm{RB}}^{\max, \mu}$ indicates the maximum transmission bandwidth, and it may change not just between numerologies, but between UL and DL.

In this case, as illustrated in FIG. 3, one resource grid may be configured for the numerology $\mu$ and an antenna port p.

Each element of the resource grid for the numerology $\mu$ and the antenna port p is indicated as a resource element, and may be uniquely identified by an index pair $(k,\bar{l})$. Herein, $k = 0,\ldots,N_{\mathrm{RB}}^{\mu} N_{\mathrm{sc}}^{\mathrm{RB}} - 1$ is an index in the frequency domain, and $\bar{l} = 0,\ldots,2^{\mu} N_{\mathrm{symb}}^{(\mu)} - 1$ indicates a location of a symbol in a subframe. To indicate a resource element in a slot, the index pair $(k,\bar{l})$ is used. Herein, $l = 0,\ldots,N_{\mathrm{symb}}^{\mu} - 1$.

The resource element $(k,\bar{l})$ for the numerology $\mu$ and the antenna port p corresponds to a complex value $a_{k,\bar{l}}^{(p,\mu)}$. When there is no risk of confusion or when a specific antenna port or numerology is specified, the indexes p and $\mu$ may be dropped and thereby the complex value may become $a_{k,\bar{l}}^{(p)}$ or $a_{k,\bar{l}}$.

In addition, a physical resource block is defined as $N_{\mathrm{sc}}^{\mathrm{RB}} = 12$ continuous subcarriers in the frequency domain. In the frequency domain, physical resource blocks may be numbered from 0 to $N_{\mathrm{RB}}^{\mu} - 1$. At this point, a relationship between the physical resource block number $n_{\mathrm{PRB}}$ and the resource elements $(k,l)$ may be given as in Equation 1.

【Equation 1】

$$n_{\mathrm{PRB}} = \left\lfloor \frac{k}{N_{\mathrm{sc}}^{\mathrm{RB}}} \right\rfloor$$

In addition, regarding a carrier part, a UE may be configured to receive or transmit the carrier part using only a subset of a resource grid. At this point, a set of resource blocks which the UE is configured to receive or transmit are numbered from 0 to $N_{\mathrm{URB}}^{\mu} - 1$ in the frequency region.

<u>Self-contained subframe structure</u>

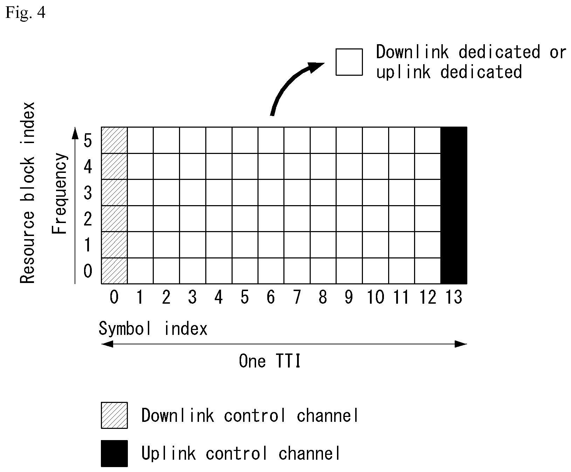

FIG. 4 is a diagram illustrating an example of a self-contained subframe structure in a wireless communication system to which the present disclosure may be implemented.

In order to minimize data transmission latency in a TDD system, 5G new RAT considers a self-contained subframe structure as shown in FIG. 4.

In FIG. 4, a diagonal line area (symbol index 0) represents a UL control area, and a black area (symbol index 13) represents a UL control area. A non0shade area may be used for DL data transmission or for UL data transmission. This structure is characterized in that DL transmission and UL transmission are performed sequentially in one subframe and therefore transmission of DL data and reception of UL ACK./NACK may be performed in the subframe. In conclusion, it is possible to reduce time for retransmitting data upon occurrence of a data transmission error and thereby minimize a latency of final data transmission.

In this self-contained subframe structure, a time gap is necessary for a base station or a UE to switch from a transmission mode to a reception mode or to switch from the reception mode to the transmission mode. To this end, some OFDM symbols at a point in time of switching from DL to UL in the self-contained subframe structure are configured as a guard period (GP).

## Analog beamforming

Since a wavelength is short in a Millimeter Wave (mmW) range, a plurality of antenna elements may be installed in the same size of area. That is, a wavelength in the frequency band 30GHz is 1cm, and thus, 64 (8x8) antenna elements may be installed in two-dimensional arrangement with a 0.5 lambda (that is, a wavelength) in 4 X 4 (4 by 4) cm panel. Therefore, in the mmW range, the coverage may be enhanced or a throughput may be increased by increasing a beamforming (BF) gain with a plurality of antenna elements.

In this case, in order to enable adjusting transmission power and phase for each antenna element, if a transceiver unit (TXRU) is included, independent beamforming for each frequency resource is possible. However, it is not cost-efficient to install TXRU at each of about 100 antenna elements. Thus, a method is considered in which a plurality of antenna elements is mapped to one TXRU and a direction of beam is adjusted with an analog phase shifter. Such an analog BF method is able to make only one beam direction over the entire frequency band, and there is a disadvantage that frequency-selective BF is not allowed.

A hybrid BF may be considered which is an intermediate between digital BF and analog BF, and which has B number of TXRU less than Q number of antenna elements. In this case, although varying depending upon a method of connecting B number of TXRU and Q number of antenna elements, beam directions capable of being transmitted at the same time is restricted to be less than B.

Hereinafter, typical examples of a method of connecting TXRU and antenna elements will be described with reference to drawings.

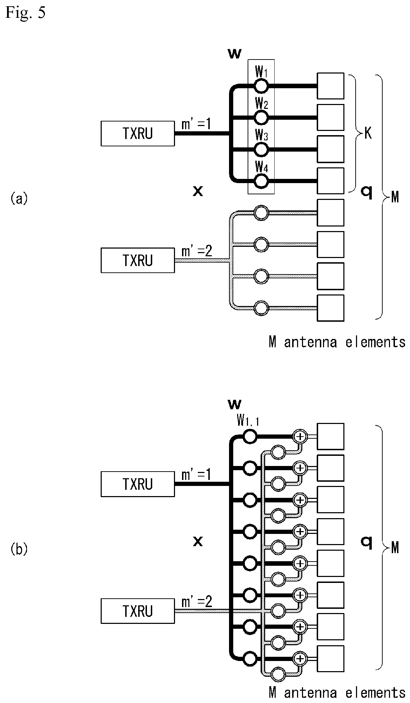

FIG. 5 is an example of a transceiver unit model in a wireless communication system to which the present disclosure may be implemented.

A TXRU virtualization model represents a relationship between output signals from TXRUs and output signals from antenna elements. Depending on a relationship between antenna elements and TXRUs, the TXRU virtualization model may be classified as a TXRU virtualization model option-1: sub-array partition model, as shown in FIG. 5(a), or as a TXRU virtualization model option-2: full-connection model.

Referring to FIG. 5(a), in the sub-array partition model, the antenna elements are divided into multiple antenna element groups, and each TXRU may be connected to one of the multiple antenna element groups. In this case, the antenna elements are connected to only one TXRU.

Referring to FIG. 5(b), in the full-connection model, signals from multiple TXRUs are combined and transmitted to a single antenna element (or arrangement of antenna elements). That is, this shows a method in which a TXRU is connected to all antenna elements. In this case, the antenna elements are connected to all the TXRUs.

In FIG. 5, q represents a transmitted signal vector of antenna elements having M number of co-polarized in one column. W represents a wideband TXRU virtualization weight vector, and W represents a phase vector to be multiplied by an analog phase shifter. That is, a direction of analog beamforming is decided by W. x represents a signal vector of M_TXRU number of TXRUs.

Herein, mapping of the antenna ports and TXRUs may be performed on the basis of 1-to-1 or 1-to-many.

TXRU-to-element mapping In FIG. 5 is merely an example, and the present disclosure is not limited thereto and may be equivalently applied even to mapping of TXRUs and antenna elements which can be implemented in a variety of hardware forms.

Further, in a New RAT system, when multiple antennas are used, a hybrid beam forming technique combining digital beam forming and analog beam forming is emerging. In this case, the analog beamforming (or radio frequency (RF) beamforming) means an operation of performing precoding (or combining) in an RF stage. In the hybrid beamforming, each of a baseband stage and the RF stage perform precoding (or combining), thereby reducing the number of RF chains and the number of digital (D)/analog (A) converters and achieving performance close to the digital beamforming. For convenience, the hybrid beamforming structure may be represented by N transceiver units (TXRU) and M physical antennas. Then, the digital beamforming for L data layers to be transmitted by the transmitter may be represented by an N by L matrix, and then the N digital signals converted are converted into an analog signal via the TXRU and then applied the analog beamforming represented by an M by N matrix.

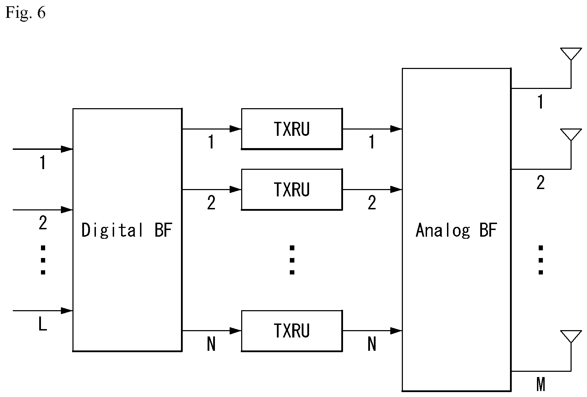

FIG. 6 is a diagram illustrating a hybrid beamforming structure in terms of TXRU and a physical antenna in the wireless communication system to which the method proposed in the present specification may be applied.

In FIG. 6, a case where the number of digital beams is L and the number of analog beams is N is illustrated.

In the New RAT system, considered is a direction in which it is designed so that the BS may change the analog beamforming by the unit of the symbol to support more efficient beamforming to a UE positioned in a specific region. Furthermore, in FIG. 6, when N specific TXRUs and M specific RF antennas are defined as one antenna panel, a scheme that introduces a plurality of antenna panels capable of independent hybrid beamforming is also considered in the New RAT system.

Feedback of Channel State Information (CSI)

In a 3GPP LTE/LTE-A system, user equipment (UE) is defined to report channel state information (CSI) to a base station (BS or eNB).

The CSI collectively refers to information that can indicate the quality of a radio channel (or referred to as a link) formed between the UE and the antenna port. For example, a rank indicator (RI), a precoding matrix indicator (PMI), a channel quality indicator (CQI), and the like correspond to the information.

In this case, the RI represents rank information of a channel, which means the number of streams received by the UE through the same time-frequency resource. Since this value is determined depending on the long term fading of the channel, the value is fed back from the UE to the BS with a period usually longer than the PMI and the CQI. The PMI is a value reflecting a channel space characteristic and represents a preferred precoding index preferred by the UE based on a metric such as signal-to-interference-plus-noise ratio (SINR). The CQI is a value representing the strength of the channel, and generally refers to a reception SINR that can be obtained when the BS uses the PMI.

In the 3GPP LTE/LTE-A system, the BS configures a plurality of CSI processes to the UE and may receive CSI for each process. In this case, the CSI process is constituted by a CSI-RS for signal quality measurement from the BS and a CSI-interference measurement (CSI-IM) resource for interference measurement.

Virtualization of Reference Signal (RS)

In the mmW, it is possible to transmit a PDSCH only in one analog beam direction at a time by analog beamforming. In this case, data transmission from the BS is possible only to a small number of UEs in the corresponding direction. Therefore, if necessary, the analog beam direction is differently configured for each antenna port so that data transmission can be simultaneously performed to a plurality of UEs in several analog beam directions.

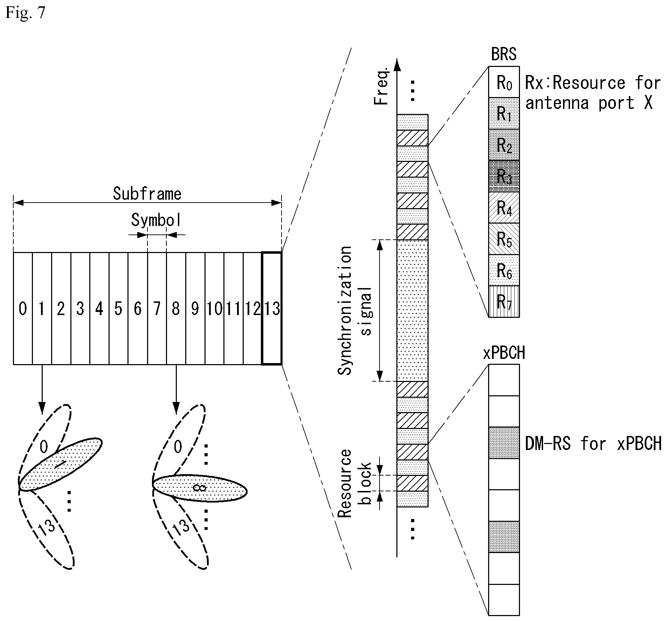

FIG. 7 is a diagram illustrating an example of a beam sweeping operation to which the method proposed in the present specification may be applied.

As described in FIG. 6, when the BS uses a plurality of analog beams, a beam sweeping operation is considered, which allows all UEs to have a reception opportunity by changing a plurality of analog beams to which the BS intends to apply in a specific subframe according to the symbol at least with respect to a synchronization signal, system information, and a paging signal because an analog beam which is advantageous for signal reception for each UE.

FIG. 7 illustrates an example of a beam sweeping operation for a synchronization signal and system information in a downlink transmission process. In FIG. 7, a physical resource (or physical channel) through which the system information is transmitted in a broadcasting scheme in the New RAT is referred to as physical broadcast channel (xPBCH).

In this case, analog beams belonging to different antenna panels within one symbol may be simultaneously transmitted and discussed is a scheme that introduces a beam reference signal (BRS) which is a reference signal transmitted, to which a single analog beam (corresponding to a specific antenna panel) is applied as illustrated in FIG. 7 to measure channels depending on the analog beam.

The BRS may be defined for a plurality of antenna ports and each antenna port of the BRS may correspond to the single analog beam.

In this case, unlike the BRS, the synchronization signal or xPBCH may be transmitted, to which all of the analog beams in the analog beam group are applied so that the signal may be well received by random UEs.

RRM Measurement

The LTE system supports RRM operations including power control, scheduling, cell search, cell reselection, handover, radio link or connection monitoring, connection establishment/re-establishment, and the like.

In this case, the serving cell may request RRM measurement information, which is a measurement value for performing the RRM operations, to the UE.

For example, the UE may measure information including cell search information for each cell, reference signal received power (RSRP), reference signal received quality (RSRQ), and the like and report the measured information to the BS.

Specifically, in the LTE system, the UE receives 'measConfig' as a higher layer signal for RRM measurement from the serving cell. The UE measures the RSRP or RSRQ according to 'measConfig'.

The RSRP, the RSRQ, and the RSSI are defined as below.

- RSRP: The RSRP may be defined as a linear average of a power contribution [W] of a resource element carrying a cell specific reference signal within a considered measurement frequency bandwidth. A cell specific reference signal R0 may be used for deciding the RSRP. When the UE may reliably detect that R1 is available, the UE may decide the RSRP by using R1 in addition to R0.

A reference point of the RSRP may be an antenna connector of the UE.

When receiver diversity is used by the UE, a reported value need not be smaller than the RSRP corresponding to a random individual diversity branch.

- RSRQ: The reference signal received quality (RSRQ) is defined as a ratio N $\times$ RSRP / (E-UTRA carrier RSSI) and N represents the number of RBs of an E-UTRA carrier RSSI measurement bandwidth. Measurements of numerator and denominator should be performed through the same set of resource blocks.

The E-UTRA carrier received signal strength indicator (RSSI) is received through a block by the UE from all sources including N resource adjacent channel interference, thermal noise, etc., in a linear average of the total received power [W] measured only in an OFDM symbol containing a reference symbol for antenna port 0 and a measurement bandwidth.

When the higher layer signaling represents a specific subframe for performing the RSRQ measurement, the RSSI is measured for all OFDM symbols in the indicated subframe.

The reference point for THE RSRQ should be the antenna connector of the UE.

When the receiver diversity is used by the UE, the reported value should not be smaller than the corresponding RSRQ of the random individual diversity branch.

RSSI: The RSSI means received broadband power including thermal noise and noise generated at the receiver within a bandwidth defined by a receiver pulse shaping filter.

The reference point for measuring the RSSI should be the antenna connector of the UE. When the receiver diversity is used by the UE, the reported value should not be smaller than the corresponding UTRA carrier RSSI of the random individual receive antenna branch.

According to such a definition, the UE which operates in the LTE system may be allowed to measure the RSRP in a bandwidth corresponding to one of 6, 15, 25, 50, 75, and 100 resource blocks (RBs) through an information element (IE) related with an allowed measurement bandwidth transmitted system information block type 3 (SIB3) in the case of intra-frequency measurement and through an allowed measurement bandwidth transmitted in SIB5 in the case of inter-frequency measurement.

Alternatively, in the absence of such an IE, the measurement may be performed in a frequency band of the entire downlink (DL) system by default. In this case, when the UE receives the allowed measurement bandwidth, the UE may consider the corresponding value as a maximum measurement bandwidth and arbitrarily measure the value of the RSRP within the corresponding value.

However, when the serving cell transmits an IE defined as WB-RSRQ and the allowed measurement bandwidth is set to 50 RB or more, the UE needs to calculate the RSRP value for the entire allowed measurement bandwidth. Meanwhile, the RSSI may be measured in the frequency band of the receiver of the UE according to the definition of the RSSI bandwidth.

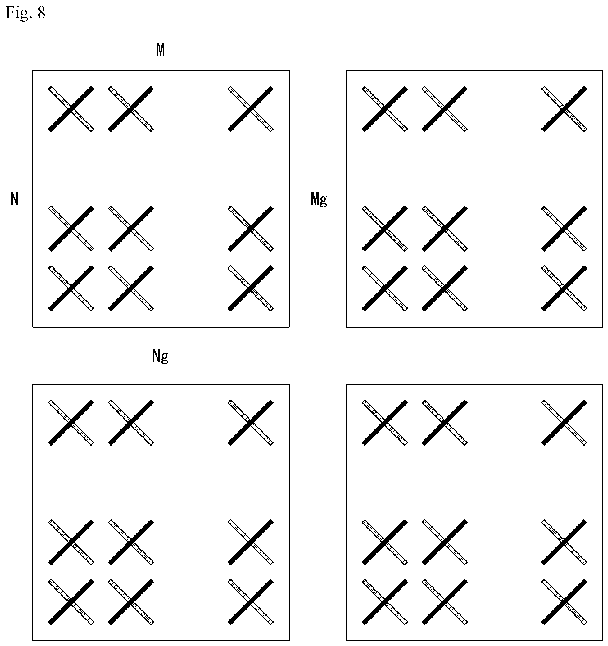

FIG. 8 is a diagram illustrating an example of an antenna array to which the method proposed in the present specification may be applied.

Referring to FIG. 8, the normalized panel antenna array may be constituted by Mg panels and Ng panels in a horizontal domain and a vertical domain, respectively.

In this case, one panel is constituted by M columns and N rows, respectively, and an X-pol antenna is assumed in FIG. 8. Therefore, the total number of antenna elements may be 2 * M * N * Mg * Ng.

Channel State Information (CSI) Related Procedure

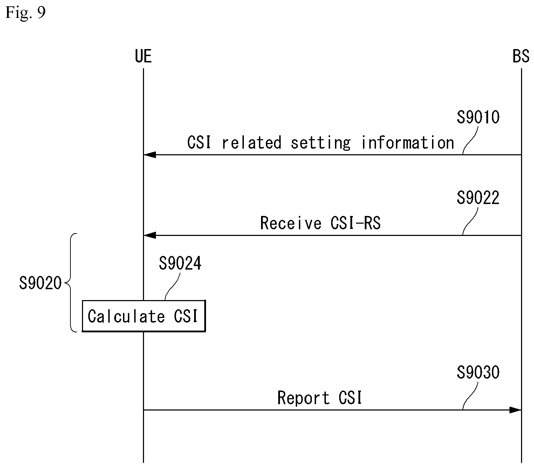

FIG. 9 is a flowchart illustrating an example of a CSI related procedure to which the method proposed in the present specification may be applied.

In the new radio (NR) system, a channel state information-reference signal (CSI-RS) is used for time/frequency tracking, CSI computation, layer 1(L1)-reference signal received power (RSRP) computation, or mobility

Throughout the present disclosure, "A and/or B" may be interpreted as the same as "including at least one of A or B".

The CSI computation is related to CSI acquisition, and L1-RSRP computation is related to beam management (BM).

The CSI indicates all types of information indicative of a quality of a radio channel (or link) formed between a UE and an antenna port.

To perform one of the above purposes of a CSI-RS, a terminal (e.g., a UE) receives CSI related configuration information from a base station (e.g., a general node B (gNB)) through a radio resource control (RRC) signaling(S9010).

The CSI-related configuration information may include at least one of CSI interference management (IM) resource-related information, CSI measurement configuration-related information, CSI resource configuration-related information, CSI-RS resource-related information, or CSI report configuration-related information.

The CSIIM resource-related information may include CSI-IM resource information, CSI-IM resource set information, etc..

The CSI-IM resource set is identified by a CSI-IM resource set ID (identifier), and one resource set includes at least one CSI-IM resource.

Each CSI-IM resource is identified by a CSI-IM resource ID.

The CSI resource configuration-related information defines a group including at least one of a non-zero power (NZP) CSI-RS resource set, a CSI-IM resource set, or a CSI-SSB resource set.

That is, the CSI resource configuration-related information includes a CSI-RS resource set list, and the CSI-RS resource set list may include at least one of a NZP CSI-RS resource set list, a CSI-IM resource set list, or a CSI-SSB resource set list.

The CSI resource configuration-related information may be expressed as CSI-REsourceConfig IE.

The CSI-RS resource set is identified by a CSI-RS resource set ID, and one resource set includes at least one CSI-RS resource.

Each CSI-RS resource is identified by a CSI-RS resource ID.

As shown in Table 1, parameters (e.g.: the BM-related parameter repetition, and the tracking-related parameter trs-Info indicative of(or indicating) a purpose of a CSI-RS may be set for each NZP CSI-RS resource set.

Table 4 shows an example of NZP CSI-RS resource set IE.

[Table 4]

```
-ASN1START
TAG-NZP-CSI-RS-RESOURCESET-START
NZP-CSI-RS-ResourceSet ::=          SEQUENCE {
    nzp-CSI-ResourceSetId           NZP-CSI-RS-ResourceSetId,
    nzp-CSI-RS-Resources            SEQUENCE (SIZE (1..maxNrofNZP-CSI-RS-
ResourcesPerSet)) OF NZP-CSI-RS-ResourceId,
    repetition                      ENUMERATED {on, off}
    aperiodicTriggeringOffset       INTEGER(0..4)
    trs-Info                    ENUMERATED {true}
    ...
}

TAG-NZP-CSI-RS-RESOURCESET-STOP
-ASN1STOP
```

In Table 4, the parameter repetition is a parameter indicative of whether to repeatedly transmit the same beam, and indicates whether repetition is set to "ON" or "OFF" for each NZP CSI-RS resource set.

The term "transmission (Tx) beam" used in the present disclosure may be interpreted as the same as a spatial domain transmission filter, and the term "reception (Rx) beam" used in the present disclosure may be interpreted as the same as a spatial domain reception filter.

For example, when the parameter repetition in Table 4 is set to "OFF", a UE does not assume that a NZP CSI-RS resource(s) in a resource set is transmitted to the same DL spatial domain transmission filter and the same Nrofports in all symbols.

In addition, the parameter repetition corresponding to a higher layer parameter corresponds to "CSI-RS-ResourceRep" of L1 parameter.

The CSI report configuration related information includes the parameter reportConfigType indicative of a time domain behavior and the parameter reportQuantity indicative of a CSI-related quantity to be reported.

The time domain behavior may be periodic, aperiodic, or semi-persistent.

In addition, the CSI report configuration-related information may be represented as CSI-ReportConfig IE, and Table 5 shows an example of the CSI-ReportConfig IE.

[Table 5]

```
-ASN1START
TAG-CSI-RESOURCECONFIG-START
CSI-ReportConfig ::=                              SEQUENCE {
    reportConfigId                                CSI-ReportConfigId,
    carrier                                       ServCellIndex OPTIONAL, --
Need S
    resourcesForChannelMeasurement                CSI-ResourceConfigId,
    csi-IM-ResourcesForInterference               CSI-ResourceConfigId OPTIONAL, --
Need R
    nzp-CSI-RS-ResourcesForInterference           CSI-ResourceConfigId OPTIONAL, --
Need R
    reportConfigType                              CHOICE {
        periodic                                  SEQUENCE {
            reportSlotConfig                          CSI-ReportPeriodicityAndOffset,
            pucch-CSI-ResourceList                        SEQUENCE (SIZE (1..maxNrofBWPs))
                                                  OF
PUCCH -CSI-Resource
        },
        semiPersistentOnPUCCH                         SEQUENCE {
            reportSlotConfig                          CSI-ReportPeriodicityAndOffset,
            pucch-CSI-ResourceList PUCCH-CSI-Resource     SEQUENCE (SIZE (1..maxNrofBWPs))
                                                  OF
        },
        semiPersistentOnPUSCH                         SEQUENCE {
            reportSlotConfig sl160, sl320},           ENUMERATED {sl5, sl10, sl20, sl40, sl80,
            reportSlotOffsetList OF INTEGER(0..32),   SEQUENCE (SIZE (1.. maxNrofUL-Allocations))
            p0alpha                                       P0-PUSCH-AlphaSetId
        },
        aperiodic                                     SEQUENCE {
            reportSlotOffsetList INTEGER(0..32)   SEQUENCE (SIZE (1..maxNrofUL-Allocations))
                                                  OF
        }
    },
    reportQuantity                                CHOICE {
        none                                          NULL,
        cri-RI-PMI-CQI                                NULL,
        cri-RI-i1                                     NULL,
        cri-RI-i1-CQI                                 SEQUENCE {
            pdsch-BundleSizeForCSI                        ENUMERATED {n2, n4}
    OPTIONAL
        },
        cri-RI-CQI                                    NULL,
        cri-RSRP                                      NULL,
        ssb-Index-RSRP                                NULL,
        cri-RI-LI-PMI-CQI                             NULL
    },
```

In addition, the UE measures CSI based on configuration information related to the CSI (S9020).

Measuring the CSI may include (1) receiving a CSI-RS by the UE (S9022) and (2) computing CSI based on the received CSI-RS (S9024).

A sequence for the CSI-RS is generated by Equation 2, and an initialization value of a pseudo-random sequence C(i) is defined by Equation 3.

【Equation 2】

$$r(m)=\frac{1}{\sqrt{2}}\left(1-2\cdot c(2m)\right)+j\frac{1}{\sqrt{2}}\left(1-2\cdot c(2m+1)\right)$$

【Equation 3】

$$c_{init}=\left(2^{10}\left(N_{symb}^{slot}n_{s,f}^{\mu}+l+1\right)(2n_{ID}+1)+n_{ID}\right)\bmod 2^{31}$$

In Equations 1 and 2, $n_{s,f}^{\mu}$ is a slot number within a radio frame, and a pseudo-random sequence generator is initialized with $C_{int}$ at the start of each OFDM symbol where $n_{s,f}^{\mu}$ is the slot number within a radio frame.

In addition, 1 indicates an OFDM symbol number in a slot, and $n_{ID}$ indicates higher-layer parameter scramblingID.

In addition, regarding the CSI-RS, resource element (RE) mapping of CSI-RS resources of the CSI-RS is performed in time and frequency domains by higher layer parameter CSI-RS-ResourceMapping.

Table 6 shows an example of CSI-RS-ResourceMapping IE.

[Table 6]

```
-ASN1START
TAG-CSI-RS-RESOURCEMAPPING-START

CSI-RS-ResourceMapping ::=          SEQUENCE {
    frequencyDomainAllocation       CHOICE {
        row1                            BIT STRING (SIZE (4)),
        row2                            BIT STRING (SIZE (12)),
        row4                            BIT STRING (SIZE (3)),
        other                           BIT STRING (SIZE (6))
    },
    nrofPorts                       ENUMERATED {p1,p2,p4,p8,p12,p16,p24,p32},
    firstOFDMSymbolInTimeDomain         INTEGER (0..13),
    firstOFDMSymbolInTimeDomain2        INTEGER (2..12)
    cdm-Type                        ENUMERATED {noCDM, fd-CDM2, cdm4-FD2-TD2,
cdm8-FD2-TD4},
    density                         CHOICE {
        dot5                            ENUMERATED {evenPRBs, oddPRBs},
        one                             NULL,
        three                           NULL,
        spare                           NULL
    },
    freqBand                        CSI-FrequencyOccupation,
    ...
}
```

In Table 6, a density (D) indicates a density of CSI-RS resources measured in a RE/port/physical resource block (PRB), and nrofPorts indicates the number of antenna ports.

In addition, the UE reports the measured CSI to the base station (S630).

Herein, when a quantity of CSI-ReportConfig in Table 6 is set to "none(or No report)", the UE may skip the reporting.

However, even when the quantity is set to "none(or No report)", the UE may report the measured CSI to the base station.

The case where the quantity is set to "none" is t when an aperiodic TRS is triggered or when repetition is set.

Herein, it may be defined such that reporting by the UE is omitted only when repetition is set to "ON"

To put it briefly, when repetition is set to "ON" and "OFF", a CSI report may indicate any one of "No report", "SSB Resource Indicator (SSBRI) and L1-RSRP", and "CSI-RS Resource Indicator (CRI) and L1-RSRP".

Alternatively, it may be defined to transmit a CSI report indicative of "SSBRI and L1-RSRP" or "CRI and L1-RSRP" when repetition is set to "OFF", it may be defined such that, and to transmit a CSI report indicative of "No report", "SSBRI and L1-RSRP", or "CRI and L1-RSRP" when repetition is "ON".

CSI measurement and reporting procedure

The NR system supports more flexible and dynamic CSI measurement and reporting.

The CSI measurement may include a procedure of acquiring the CSI by receiving the CSI-RS and computing the received CSI-RS.

As time domain behaviors of the CSI measurement and reporting, aperiodic/semi-persistent/periodic channel measurement (CM) and interference measurement (IM) are supported.

A 4 port NZP CSI-RS RE pattern is used for configuring the CSI-IM.

CSI-IM based IMR of the NR has a similar design to the CSI-IM of the LTE and is configured independently of ZP CSI-RS resources for PDSCH rate matching.

In addition, in ZP CSI-RS based IMR, each port emulates an interference layer having (a preferable channel and) precoded NZP CSI-RS.

This is for intra-cell interference measurement with respect to a multi-user case and primarily targets MU interference.

The base station transmits the precoded NZP CSI-RS to the UE on each port of the configured NZP CSI-RS based IMR.

The UE assumes a channel/interference layer for each port and measures interference.

In respect to the channel, when there is no PMI and RI feedback, multiple resources are configured in a set and the base station or the network indicates a subset of NZP CSI-RS resources through the DCI with respect to channel/interference measurement.

Resource setting and resource setting configuration will be described in more detail.

Resource setting

Each CSI resource setting 'CSI-ResourceConfig' includes a configuration for $S \geq 1$ CSI resource set (given by higher layer parameter csi-RS-ResourceSetList).

In this case, the CSI resource setting corresponds to the CSI-RS-resourcesetlist.

In this case, S represents the number of configured CSI-RS resource sets.

In this case, the configuration for $S \geq 1$ CSI resource set includes each CSI resource set including CSI-RS resources (constituted by NZP CSI-RS or CSI IM) and an SS/PBCH block (SSB) resource used for L1-RSRP computation.

Each CSI resource setting is positioned in a DL BWP (bandwidth part) identified by a higher layer parameter bwp-id.

In addition, all CSI resource settings linked to CSI reporting setting have the same DL BWP.

A time domain behavior of the CSI-RS resource within the CSI resource setting included in CSI-ResourceConfig IE is indicated by higher layer parameter resourceType and may be configured to be aperiodic, periodic, or semi-persistent.

The number S of configured CSI-RS resource sets is limited to '1' with respect to periodic and semi-persistent CSI resource settings.

Periodicity and slot offset which are configured are given in numerology of associated DL BWP as given by bwp-id with respect to the periodic and semi-persistent CSI resource settings.

When the UE is configured as multiple CSI-ResourceConfigs including the same NZP CSI-RS resource ID, the same time domain behavior is configured with respect to CSI-ResourceConfig.

When the UE is configured as multiple CSI-ResourceConfigs including the same CSI-IM resource ID, the same time domain behavior is configured with respect to CSI-ResourceConfig.

Next, one or more CSI resource settings for channel measurement (CM) and interference measurement (IM) are configured through higher layer signaling.

- CSI-IM resource for interference measurement.
- NZP CSI-RS resource for interference measurement.
- NZP CSI-RS resource for channel measurement.

That is, channel measurement resource (CMR) may be NZP CSI-RS and interference measurement resource (IMR) may be NZP CSI-RS for CSI-IM and IM.
In this case, CSI-IM (or ZP CSI-RS for IM) is primarily used for inter-cell interference measurement.
In addition, NZP CSI-RS for IM is primarily used for intra-cell interference measurement from multi-users.
The UE may assume CSI-RS resource(s) for channel measurement and CSI-IM/NZP CSI-RS resource(s) for interference measurement configured for one CSI reporting are 'QCL-TypeD' for each resource.

Resource setting configuration

As described, the resource setting may mean a resource set list.
In each trigger state configured by using higher layer parameter CSI-AperiodicTriggerState with respect to aperiodic CSI, each CSI-ReportConfig is associated with one or multiple CSI-ReportConfigs linked to the periodic, semi-persistent, or aperiodic resource setting.
One reporting setting may be connected with a maximum of three resource settings.

- When one resource setting is configured, the resource setting (given by higher layer parameter resourcesForChannelMeasurement) is for channel measurement for L1-RSRP computation.
- When two resource settings are configured, a first resource setting (given by higher layer parameter resourcesForChannelMeasurement) is for channel measurement and a second resource setting (given by csi-IM-ResourcesForInterference or nzp-CSI-RS - ResourcesForInterference) is for interference measurement performed on CSI-IM or NZP CSI-RS.
- When three resource settings are configured, a first resource setting (given by resourcesForChannelMeasurement) is for channel measurement, a second resource setting (given by csi-IM-ResourcesForInterference) is for CSI-IM based interference measurement, and a third resource setting (given by nzp-CSI-RS-ResourcesForInterference) is for NZP CSI-RS based interference measurement.

Each is linked to periodic or semi-persistent resource setting with respect to semi-persistent or periodic CSI.

- When one resource setting (given by resourcesForChannelMeasurement) is configured, the resource setting is for channel measurement for L1-RSRP computation.
- When two resource settings are configured, a first resource setting (given by resourcesForChannelMeasurement) is for channel measurement and a second resource setting (given by higher layer parameter csi-IM-ResourcesForInterference) is for interference measurement performed on CSI-IM.

CSI measurement related CSI computation will be described.
When interference measurement is performed on CSI-IM, each CSI-RS resource for channel measurement is associated with the CSI-IM resource for each resource by an order of CSI-RS resources and CSI-IM resources within a corresponding resource set.
The number of CSI-RS resources for channel measurement is equal to the number of CSI-IM resources.
In addition, when the interference measurement is performed in the NZP CSI-RS, the UE does not expect to be configured as one or more NZP CSI-RS resources in the associated resource set within the resource setting for channel measurement.
A UE in which higher layer parameter nzp-CSI-RS-ResourcesForInterference is configured does not expect that 18 or more NZP CSI-RS ports will be configured in the NZP CSI-RS resource set.
For CSI measurement, the UE assumes the followings.

- Each NZP CSI-RS port configured for interference measurement corresponds to an interference transport layer.
- All interference transport layers of the NZP CSI-RS port for interference measurement consider an energy per resource element (EPRE) ratio.
- Different interference signals on RE(s) of the NZP CSI-RS resource for channel measurement, the NZP CSI-RS resource for interference measurement, or CSI-IM resource for interference measurement.

A CSI reporting procedure will be described in more detail.

For CSI reporting, time and frequency resources which may be used by the UE are controlled by the base station.

The channel state information (CSI) may include at least one of a channel quality indicator (CQI), a precoding matrix indicator (PMI), a CSI-RS resource indicator (CRI), an SS/PBCH block resource indicator (SSBRI), a layer indicator (LI), a rank indicator (RI), and L1-RSRP.

For the CQI, PMI, CRI, SSBRI, LI, RI, and L1-RSRP, the UE is configured by a higher layer as N≥1 CSI-ReportConfig reporting setting, M≥1 CSI-ResourceConfig resource setting, and a list (provided by aperiodicTriggerStateList and semiPersistentOnPUSCH) of one or two trigger states.

In the aperiodicTriggerStateList, each trigger state includes the channel and an associated CSI-ReportConfigs list optionally indicating resource set IDs for interference.

In the semiPersistentOnPUSCH-TriggerStateList, each trigger state includes one associated CSI-ReportConfig.

In addition, the time domain behavior of CSI reporting supports periodic, semi-persistent, and aperiodic.

Hereinafter, each of periodic, semi-persistent (SP), and aperiodic CSI reporting will be described.

The periodic CSI reporting is performed on short PUCCH and long PUCCH.

The periodicity and slot offset of the periodic CSI reporting may be configured as RRC and refer to the CSI-ReportConfig IE.

Next, SP CSI reporting is performed on short PUCCH, long PUCCH, or PUSCH.

In the case of SP CSI on the short/long PUCCH, the periodicity and the slot offset are configured as the RRC and the CSI reporting to separate MAC CE is activated/deactivated.

In the case of the SP CSI on the PUSCH, the periodicity of the SP CSI reporting is configured as the RRC, but the slot offset is not configured as the RRC and the SP CSI reporting is activated/deactivated by DCI (format 0_1).

An initial CSI reporting timing follows a PUSCH time domain allocation value indicated in the DCI and a subsequent CSI reporting timing follows a periodicity configured as the RRC.

Separated RNTI (SP-CSI C-RNTI) is used with respect to the SP CSI reporting on the PUSCH.

DCI format 0_1 may include a CSI request field and may activate/deactivate a specific configured SP-CSI trigger state.

In addition, the SP CSI reporting has the same or similar activation/deactivation as a mechanism having data transmission on SPS PUSCH.

Next, the aperiodic CSI reporting is performed on the PUSCH and is triggered by the DCI.

In the case of AP CSI having AP CSI-RS, an AP CSI-RS timing is configured by the RRC.

In this case, a timing for the AP CSI reporting is dynamically controlled by the DCI.

The NR does not adopt a scheme (for example, transmitting RI, WB PMI/CQI, and SB PMI/CQI in order) of dividing and reporting the CSI in multiple reporting instances applied to PUCCH based CSI reporting in the LTE.

Instead, the NR restricts specific CSI reporting not to be configured in the short/long PUCCH and a CSI omission rule is defined.

In addition, in relation with the AP CSI reporting timing, a PUSCH symbol/slot location is dynamically indicated by the DCI. In addition, candidate slot offsets are configured by the RRC.

For the CSI reporting, slot offset(Y) is configured for each reporting setting.

For UL-SCH, slot offset K2 is configured separately.

Two CSI latency classes (low latency class and high latency class) are defined in terms of CSI computation complexity.

The low latency CSI is a WB CSI that includes up to 4 ports Type-I codebook or up to 4-ports non-PMI feedback CSI.

The high latency CSI refers to CSI other than the low latency CSI.

For a normal UE, (Z, Z') is defined in a unit of OFDM symbols.

Z represents a minimum CSI processing time from the reception of the aperiodic CSI triggering DCI to the execution of the CSI reporting.

Z' represents a minimum CSI processing time from the reception of the CSI-RS for channel/interference to the execution of the CSI reporting.

Additionally, the UE reports the number of CSIs which may be simultaneously calculated.

CSI reporting using PUSCH

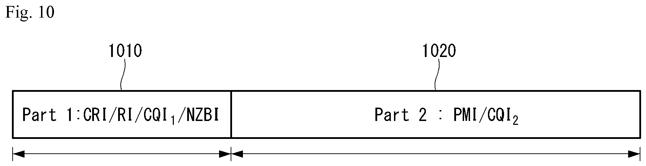

FIG. 10 illustrates an example of an information payload of PUSCH based CSI reporting.

NZBI is a parameter representing an indication of the number of non-zero wideband amplitude coefficients per layer for the Type II PMI codebook.

That is, NZBI is a parameter representing an indication of the number of non-zero wideband amplitude coefficients per layer for the Type II PMI codebook.

That is, NZBI is an indicator indicating 0 or a relative amplitude coefficient other than 0.

Alternatively, NZBI may represent the number of zero amplitude beams or non-zero amplitude beams and may be referred to as N_RPI0.

When decoding for the DCI is successful, the UE performs aperiodic CSI reporting using the PUSCH of a serving cell c.

The aperiodic CSI reporting performed on the PUSCH supports wideband and sub-band frequency granularity.

The aperiodic CSI reporting performed on the PUSCH supports Type I and Type II CSIs.

When decoding DCI format 0_1 activating a semi-persistent (SP) CSI trigger state is successful, the UE performs SP CSI reporting for the PUSCH.

DCI format 0_1 includes a CSI request field indicating the SP CSI trigger state to be activated or deactivated.

The SP CSI report for the PUSCH supports Type I and Type II CSIs with the wideband and sub-band frequency granularity.

The PUSCH resource and the modulation and coding scheme (MCS) for the SP CSI reporting are semi-permanently allocated by the UL DCI.

The CSI reporting for the PUSCH may be multiplexed with UL data on the PUSCH.

Further, the CSI reporting for the PUSCH may be performed without multiplexing with the UL data.

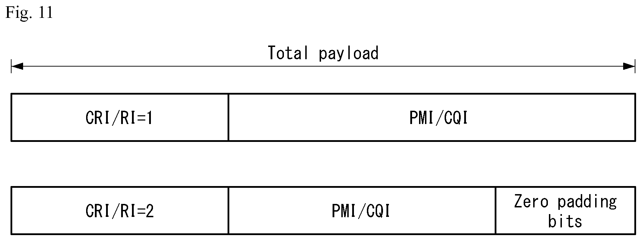

For Type I and Type II CSIs on the PUSCH, the CSI reporting includes two parts (Part 1 and Part 2) as illustrated in FIG. 11.

Part 1 1010 is used for identifying the number of information bits of Part 2 1020. The entirety of Part 1 is transmitted before Part 2.

- For Type I CSI feedback, Part 1 contains an RI (if reported), a CRI (if reported), and a CQI of a first codeword.

Part 2 includes a PMI and includes a CQI for a second codeword when RI > 4.

- For Type II CSI feedback, Part 1 has a fixed payload size and includes the RI, the CQI and an indication (NZBI) for the number of non-zero wideband amplitude coefficients per layer for Type II CSI.

In Part 1, the RI, the CQI, and the NZBI are separately encoded.

Part 2 includes the PMI of Type II CSI.

Parts 1 and 2 are encoded separately.

Type II CSI report carried on PUSCH are calculated independently of all Type II CSI reporting carried in PUCCH format 1, 3, or 4.

When a higher layer parameter reportQuantity is set to one of values 'cri-RSRP' and 'ssb-Index-RSRP', the CSI feedback is constituted by a single part.

For Type I and Type II CSI reporting configured for the PUCCH but transmitted on the PUSCH, an encoding scheme follows an encoding scheme of the PUCCH.

When the CSI reporting includes two parts in the PUSCH and a CSI payload to be reported has a smaller payload size provided in a PUSCH resource allocated for CSI reporting, the UE may omit some of Part 2 CSI.

Omission of Part 2 CSI is determined according to the priority and Priority 0 is a highest priority and the priority has a lowest priority.

CSI reporting using PUCCH

The UE is semi-statically configured by a higher layer in order to perform the periodic CSI reporting on the PUCCH.

The UE may be configured as the higher layer for multiple periodic CSI reports corresponding to a CSI report setting indication in which the associated CSI measurement link and CSI resource setting are configured as one or more higher layers set as the higher layer.

Periodic CSI reporting in PUCCH format 2, 3 or 4 supports Type I CSI in units of a broadband.

For the SP CSI on the PUSCH, the UE performs the SP CSI report in the PUCCH applied starting from slot n + $3N_{slot}^{subframe,\mu}$ + 1 after HARQ-ACK corresponding to carrying the selection command is transmitted in slot n.

The selection command includes one or more report setting indications in which the associated CSI resource setting is configured.

In the PUCCH, the SP CSI report supports Type I CSI.

The SP CSI report for PUCCH format 2 supports Type I CSI having the broadband frequency granularity. In PUCCH format 3 or 4, the SP CSI report supports Type I sub-band CSI and Type II CSI with the wideband frequency granularity.

When the PUCCH carries Type I CSI with the broadband frequency granularity, the CSI payload carried by PUCCH format 2 and PUCCH format 3 or 4 is the same regardless of the RI (if reported) and the CRI (if reported).

In the case of Type I CSI sub-band report in PUCCH format 3 or 4, the payload is split into two parts.

A first part (Part 1) includes RI (if reported), CRI (if reported), and CQI of the first codeword.

A second part (Part 2) includes a PMI and includes a CQI for the second codeword when RI > 4.

The SP CSI reporting carried in PUCCH format 3 or 4 supports Type II CSI feedback, but supports only Part 1 of Type II CSI feedback.

In PUCCH format 3 or 4 supporting Type II, the CSI report may depend on a UE capability.

Type II CSI report (corresponding only Part 1) carried in PUCCH format 3 or 4 is calculated independently of Type II CSI report carried in the PUSCH.

When the UE is configured as the CSI reporting in PUCCH format 2, 3, or 4, each PUCCH resource is configured for each candidate UL BWP.

In the case where the UE is configured with an active SP CSI report configuration in the PUCCH and does not receive a deactivation command, a BWP in which the CSI reporting is performed is an active BWP, the CSI is performed and if not, the CSI reporting is suspended. Such an operation is also similarly applied to a case of P CSI on PUCCH. When BWP switching occurs with respect to PUSCH based SP CSI reporting, it is appreciated that the corresponding CSI reporting is automatically deactivated.

Table 7 shows an example of a PUCCH format.

[Table 7]

| PUCCH format | Length in OFDM symbols $N_{\text{symb}}^{\text{PUCCH}}$ | Number of bits |
|---|---|---|
| 0 | 1 - 2 | ≤2 |
| 1 | 4 - 14 | ≤2 |
| 2 | 1 - 2 | >2 |
| 3 | 4 - 14 | >2 |
| 4 | 4 - 14 | >2 |

In Table 7, $N_{\text{symb}}^{\text{PUCCH}}$ represents the length of the PUCCH transmission in the OFDM symbol.

In addition, the PUCCH format is divided into short PUCCH or long PUCCH according to the length of the PUCCH transmission.

In Table 7, PUCCH formats 0 and 2 may be referred to as the short PUCCH and PUCCH formats 1, 3, and 4 may be referred to as the long PUCCH.

Hereinafter, PUCCH based CSI reporting will be divided into short PUCCH based CSI reporting and long PUCCH based CSI reporting and more specifically described.

FIG. 11 illustrates an example of an information payload of short PUCCH based CSI reporting.

The short PUCCH based CSI reporting is used only for wideband CSI reporting.

The short PUCCH based CSI reporting has the same information payload regardless of the RI/CRI in a given slot (to avoid blind decoding).

The size of the information payload may vary depending on most CSI-RS ports of the CSI-RS configured in the CSI-RS resource set.

When the payload including the PMI and the CQI are diversified into the RI/CQI, padding bits are added to the RI/CRI/PMI/CQI prior to encoding to equalize the payload associated with different RI/CRI values.

In addition, the RI/CRI/PMI/CQI may be encoded together with the padding bit.

Long PUCCH-based CSI reporting is described below.

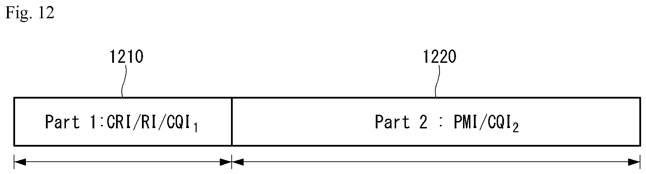

FIG. 12 shows an example of information payload of long PUCCH-based CSI reporting.

Long PUCCH-based CSI reporting may use the same solution as a short PUCCH with respect to wideband reporting.

Furthermore, long PUCCH-based CSI reporting has the same payload regardless of an RI/CRI.

Furthermore, two-part encoding (for Type I) is applied to subband reporting.

A part 1 1210 may have fixed payload depending on the number of ports, a CSI type, an RI restriction, etc. A part 2 1220 may have various payload sizes depending on the part 1.

A CRI/RI may be first decoded in order to determine the payload of a PMI/CQI.

Furthermore, CQIi (i=1,2) corresponds to a CQI for an i-th codeword (CW).

Type II CSI reporting may carry only the part 1 with respect to a Long PUCCH.

In NR, one slot is defined by 14 slots, and thus an actual period and offset for the reporting of CSI described in Table 1 are determined based on a numerology of an uplink band.

However, when an uplink (UL) active bandwidth part is changed in the state in which a downlink (DL) active bandwidth part has not been changed, the period and offset of the changed uplink bandwidth part may be different depending on a numerology of the changed uplink bandwidth part.

For example, if the existing configuration is a 20-slot period, but subcarrier spacing is doubled, symbol duration is reduced by half, and thus the configured 20-slot period may use an actual time that is half (e.g., 10ms for 30kHZ SCS) the existing configured value (e.g., 20ms for 15kHZ SCS).

The period for the reporting of CSI may be different if an UL active BWP is newly configured as described above.

In particular, unlike in the case of an unpaired band (e.g., TDD), in a paired band (e.g., FDD), a DL active BWP may be fixed and an UL active BWP may be changed because an active BWP can be independently configured with respect to UL and DL.

Accordingly, since UL numerology is changed, a different operation may naturally occur differently from a configuration for the reporting of CSI.

Accordingly, in order to solve such a problem, an embodiment of the present invention provides a method for configuring a configuration value based on a change when an UL active BWP is changed.

<Embodiment 1>

When an UL active BWP and/or a numerology is changed, configurations related to the changed UL active BWP and/or numerology may be deactivated, and a user equipment may receive a configuration value, related to non-activated configurations, from a base station and apply the received configuration value.

Specifically, when a DL active BWP is fixed and an UL active BWP and/or numerology is changed, some or all of configuration values included in configuration information of periodic and/or semi-persistent CSI reporting related to the changed UL active BWP and/or numerology may not be automatically activated.

For example, when a DL active BWP is fixed and an UL active BWP and/or numerology is changed, a period and offset value of configuration values included in configuration information of periodic and/or semi-persistent CSI reporting related to the changed UL active BWP and/or numerology may be automatically deactivated and not applied.

In this case, a base station may transmit configuration information, including at least one of a period or offset value according to the changed UL active BWP and/or numerology, to a user equipment. The user equipment may perform the reporting of CSI by applying the period and/or offset value received from the base station.

In this case, the base station may transmit a new configuration value to the user equipment through RRC, MAC or DCI.

That is, the base station may reconfigure configuration values related to the changed UL active BWP and/or numerology by transmitting the new configuration value to the user equipment.

<Embodiment 2>

When an UL active BWP and/or numerology is changed, configurations related to the changed UL active BWP and/or numerology may be reconfigured based on pre-configured values.

Specifically, when a DL active BWP is fixed and an UL active BWP and/or numerology is changed, some or all of configuration values included in configuration information of periodic and/or semi-persistent CSI reporting related to the changed UL active BWP and/or numerology may be reconfigured based on a pre-configured or pre-defined default value.

For example, when a DL active BWP is fixed and an UL active BWP and/or numerology is changed, a period and offset value of configuration values included in configuration information of periodic and/or semi-persistent CSI reporting related to the changed UL active BWP and/or numerology may be re-configured based on a pre-configured default value.

In this case, the pre-configured default value may be included in the configuration information and transmitted to a user equipment or may be pre-configured.

When an UL active BWP and/or numerology is changed, a user equipment may reconfigure a period and offset value based on a pre-configured default value, and may perform the reporting of CSI.

<Embodiment 3>

When an UL active BWP and/or numerology is changed, in the existing configured configuration value (e.g., a period and/or offset value), configuration information for the reporting of corresponding CSI may be re-configured or interpreted based on a set criterion.

In this case, the configuration information, that is, a criterion for re-configuration or interpretation, may be a slot-based period/offset based on a numerology of a DL BWP.

Alternatively, re-configured configuration values may be defined as an absolute time (e.g., millisecond or subframe) or may be defined based on a slot for a specific numerology (e.g., 15kHz subcarrier spacing).

For example, a CSI reporting period $T_\mu$ and offset $O_\mu$ for a numerology $\mu$ may be defined as in Equation 4 based on $T_0$={5, 10, 20, 48, 80, 160, 320} slot in 15kHz subcarrier spacing and a value defined as $O_0$.

【Equation 4】

$$T_\mu = T_0 \times 2^\mu$$

$$O_\mu = O_0 \times 2^\mu$$

The configuration of a period and/or offset value for two or more BWPs and/or numerologies may be provided to a user equipment as a single configuration through such a method.

When an UL active BWP and/or numerology is changed, a user equipment may derive and apply a period and/or offset value for the changed UL active BWP and/or numerology through such a method, and may perform the reporting of CSI based on the applied configuration value.

Such a method may be derived by a base station and a user equipment according to an UL active BWP and used.

<Embodiment 4>

The configuration of a period and/or offset for a plurality of numerologies and/or BWPs may be configured in the above-described reporting setting.

Specifically, the configuration values of a plurality of numerologies and/or BWPs may be configured in a user equipment through reporting setting.

When an UL active BWP and/or numerology is changed, a user equipment may apply a configuration value corresponding to the changed UL active BWP and/or numerology among configured configuration values through reporting setting.

That is, a base station and a user equipment may report periodic or semi-persistent CSI to a base station using a configuration value (e.g., a period and/or offset value) corresponding to an active BWP and/or numerology at the occasion of the reporting of periodic or semi-persistent CSI.

Such a configuration may be included in reporting setting, such as RRC, and transmitted to a user equipment.

The flexibility of a configuration method can be enhanced because a base station can designate and select a configuration suitable for each numerology with respect to a user equipment through such a method.

Embodiment 4 may be performed in such a manner that configuration information including a different period and/or offset value is transmitted to a user equipment based on each UL BWP and/or numerology or reporting setting itself is differently configured for each UL BWP and/or numerology.

<Embodiment 5>

A base station may designate a period and/or offset value to be used by a user equipment through MAC signaling and/or DCI.

Specifically, when an UL active BWP and/or numerology is changed, a period and/or offset value related to the changed UL active BWP and/or numerology may be configured through the MAC signaling and/or DCI of a base station.

A base station and a user equipment may report periodic or semi-persistent CSI using a period and/or offset value designated through MAC signaling and/or DCI.

The MAC signaling and/or DCI may be transmitted along with the active BWP signaling of the user equipment.

In this case, in order to reduce signaling overhead, a signaling candidate for the MAC signaling and/or DCI may be configured through each RRC and/or MAC signaling.

Embodiment 5 may further include a method of signaling a multiplier with respect to the existing or reference period and/or offset value in addition to an explicit period and/or offset value.

Such a method is a method of dynamically selecting a period and/or offset value to be actually applied directly, and can enhance the flexibility of a user equipment.

In another embodiment of the present invention, a PUCCH resource used for a user equipment to report CSI may be allocated to each UL BWP.

Specifically, a base station may configure a PUCCH resource used for a user equipment to report CSI through configuration information.

In this case, the PUCCH resource may be allocated (or configured) to each UL BWP for the reporting of CSI by a user equipment.

The user equipment may report CSI using the allocated PUCCH resource.

That is, each PUCCH resource ID may be configured in a BWP configured in a user equipment. In this case, the BWP may be configured up to a maximum of four for each DL, UL and supplementary UL carrier.

In this case, a configuration for the configuration of the PUCCH resource may be transmitted to a user equipment through an RRC configuration within the resource configuration.

Alternatively, the candidate values of PUCCH resource IDs may be transmitted to a user equipment through RRC and/or MAC. One of the candidate values given through the MAC or DCI may be selected and used for the reporting of CSI.

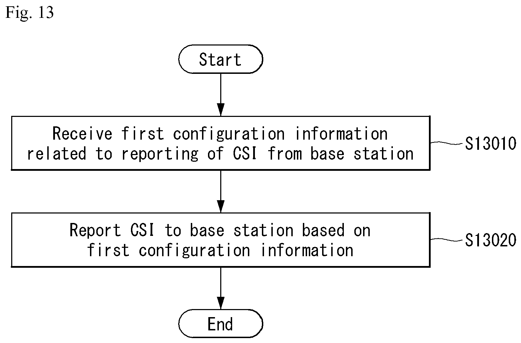

FIG. 13 is a flowchart showing an example of a CSI reporting procedure of a user equipment to which methods proposed in this specification may be applied. FIG. 13 is merely for convenience of description, and does not limit the scope of the present invention.

Referring to FIG. 13, the user equipment may report, to a base station, CSI measured through a configuration configured by the base station.

Specifically, the user equipment may receive, from the base station, first configuration information related to the reporting of CSI (S13010).

In this case, the first configuration information may include the configuration values of a BWP for the reporting of CSI. The configuration values may include the periods and/or offset values described in the embodiments 1 to 5.

Furthermore, the first configuration information may include resource configuration information related to a resource for the reporting of CSI as described above. The resource for the reporting of CSI may be configured for each of at least one bandwidth part (BWP) activated for the reporting of CSI.

When an UL active BWP and/or numerology for the reporting of CSI is changed, a configuration value for the changed UL active BWP and/or numerology may be reconfigured through the methods described in the embodiments 1 to 5.

Thereafter, the user equipment may measure a channel based on the first configuration information, and may report CSI, that is, the measured channel state information, to the base station (S13020).

A resource for the reporting of CSI may be configured through such a method. Although an UL active BWP and/or numerology for the reporting of CSI is changed, a configuration value related to the changed UL active BWP and/or numerology may be reconfigured.

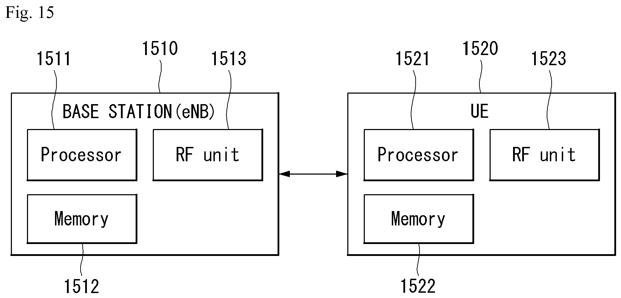

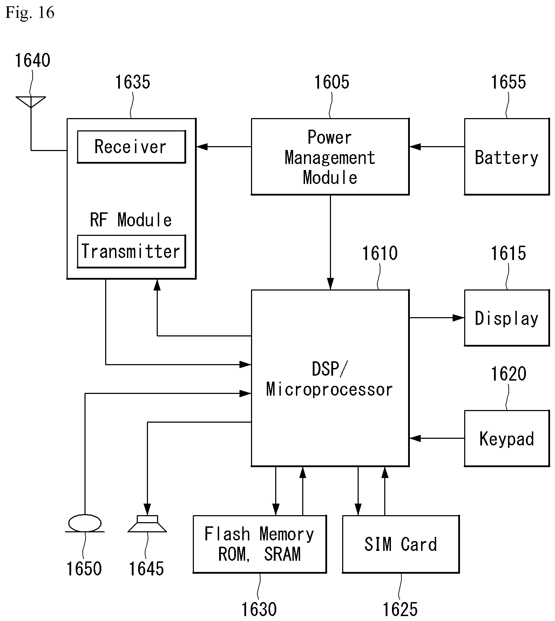

In relation to this, a corresponding user equipment may be configured as an apparatus, such as that shown in FIGS. 15 and 16. When such a point is taken into consideration, the operation in FIG. 13 may be performed by the apparatus shown in FIGS. 15 and 16.

For example, a processor 1521 (and/or processor 1610) may be configured to receive, by a user equipment, first configuration information related to the reporting of CSI from a base station (step S13010). Furthermore, the processor 1521 (and/or processor 1610) may be configured to measure a channel based on the first configuration information and to report CSI, that is, the measured channel state information, to the base station (step S13020).

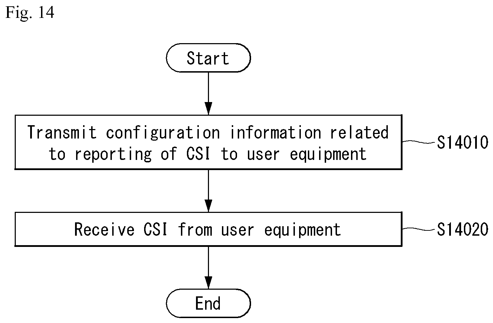

FIG. 14 is a flowchart showing an example of a procedure for a base station to receive CSI reporting from a user equipment, to which methods proposed in this specification may be applied. FIG. 14 is merely for convenience of description, and does not limit the scope of the present invention.

Referring to FIG. 14, the base station may transmit configuration information to a user equipment for the reporting of CSI, and may receive measured CSI from the user equipment through a configured configuration.

Specifically, the base station may transmit, to the user equipment, first configuration information related to the reporting of CSI (S14010).

In this case, the first configuration information may include the configuration values of a BWP for the reporting of CSI. The configuration values may include the periods and/or offset values described in the embodiments 1 to 5.

Furthermore, the first configuration information may include resource configuration information related to a resource for the reporting of CSI as described above. The resource for the reporting of CSI may be configured for each of at least one bandwidth part (BWP) activated for the reporting of CSI.

When an UL active BWP and/or numerology for the reporting of CSI is changed, a configuration value for the changed UL active BWP and/or numerology may be reconfigured through the methods described in the embodiments 1 to 5.

Thereafter, the base station may receive CSI, that is, state information related to a measured channel, from the user equipment based on the first configuration information (S14020).

A resource for the reporting of CSI may be configured through such a method. Although an UL active BWP and/or numerology is changed for the reporting of CSI is changed, a related configuration value may be reconfigured.

In relation to this, a corresponding user equipment may be configured as an apparatus, such as that shown in FIGS. 15 and 16. When such a point is taken into consideration, the operation of FIG. 14 may be performed by the apparatus shown in FIGS. 15 and 16.

For example, the processor 1521 (and/or processor 1610) may be configured so that a base station transmits, to the user equipment, first configuration information related to the reporting of CSI (step S14010). Furthermore, the processor 1521 (and/or processor 1610) may be configured to receive CSI, that is, state information related to a measured channel, from the user equipment based on the first configuration information (step S14020).

## General apparatus to which the present invention may be applied

FIG. 15 illustrates a block diagram of a wireless communication apparatus to which methods proposed in this specification may be applied.

Referring to FIG. 15, the wireless communication system includes an eNB 1510 and multiple UEs 1520 positioned within the area of the eNB 1510.

The eNB and the UE may be represented as respective wireless devices.

The eNB 1510 includes a processor 1511, memory 1512 and a radio frequency (RF) module 1513. The processor 1511 implements the functions, processes and/or methods proposed in FIGS. 1 to 14. The layers of a radio interface protocol may be implemented by the processor. The memory 1512 is connected to the processor and stores various types of information for driving the processor. The RF module 1513 is connected to the processor and transmits and/or receives a radio signal.

The UE 1520 includes a processor 1521, memory 1522 and an RF module 1523.

The processor 1521 implements the functions, processes and/or methods proposed in FIGS. 1 to 14. The layers of a radio interface protocol may be implemented by the processor. The memory 1522 is connected to the processor and stores various types of information for driving the processor. The RF module 1523 is connected to the processor and transmits and/or receives a radio signal.

The memory 1512, 1522 may be positioned inside or outside the processor 1511, 1521 and may be connected to the processor 1511, 1521 by various well-known means.

Furthermore, the eNB 1510 and/or UE 1520 may have a single antenna or multiple antennas.

FIG. 16 illustrates a block diagram of a communication apparatus according to an embodiment of the present invention.

In particular, FIG. 16 is a diagram illustrating the UE of FIG. 15 more specifically.

Referring to FIG. 16, the UE may include a processor (or digital signal processor (DSP)) 1610, an RF module (or RF unit) 1635, a power management module 1605, an antenna 1640, a battery 1655, a display 1615, a keypad 1620, a memory 1630, a subscriber identification module (SIM) card 1625 (this element is optional), a speaker 1645, and a microphone 1650. The UE may further include a single antenna or multiple antennas.

The processor 1610 implements the functions, processes and/or methods proposed in FIGS. 1 to 14. The layers of a radio interface protocol may be implemented by the processor.

The memory 1630 is connected to the processor, and stores information related to the operation of the processor. The memory may be positioned inside or outside the processor and may be connected to the processor by various well-known means.

A user inputs command information, such as a telephone number, by pressing (or touching) a button of the keypad 1620 or through voice activation using the microphone 1650, for example. The processor receives such command information and performs processing so that a proper function, such as making a phone call to the telephone number, is performed. Operational data may be extracted from the SIM card 1625 or the memory. Furthermore, the processor may recognize and display command information or driving information on the display 1615, for convenience sake.

The RF module 1635 is connected to the processor and transmits and/or receives RF signals. The processor delivers command information to the RF module so that the RF module transmits a radio signal that forms voice communication data, for example, in order to initiate communication. The RF module includes a receiver and a transmitter in order to receive and transmit radio signals. The antenna 1640 functions to transmit and receive radio signals. When a radio signal is received, the RF module delivers the radio signal so that it is processed by the processor, and may convert the signal into a baseband. The processed signal may be converted into audible or readable information output through the speaker 1645.

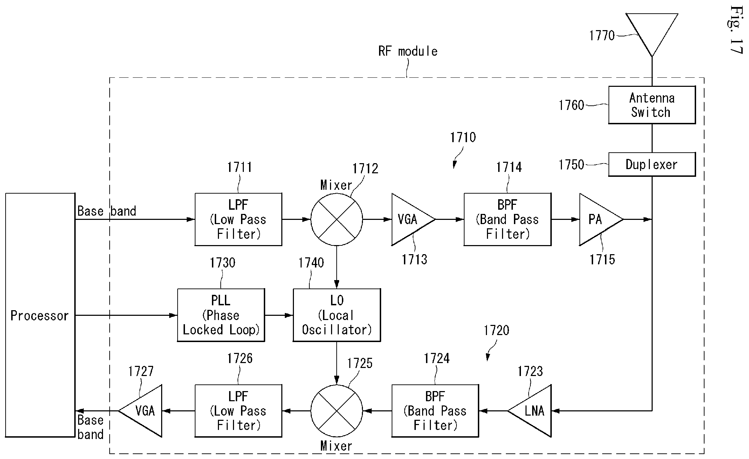

FIG. 17 is a diagram showing an example of the RF module of a wireless communication apparatus to which a method proposed in this specification may be applied.

Specifically, FIG. 17 shows an example of an RF module that may be implemented in a frequency division duplex (FDD) system.

First, in a transmission path, the processor described in FIGS. 15 and 16 processes data to be transmitted and provides an analog output signal to a transmitter 1710.

In the transmitter 1710, the analog output signal is filtered by a low pass filter (LPF) 1711 in order to remove images caused by digital-to-analog conversion (ADC). The signal is up-converted from a baseband to an RF by a mixer 1712 and is amplified by a variable gain amplifier (VGA) 1713. The amplified signal is filtered by a filter 1714, additionally amplified by a power amplifier (PA) 1715, routed by a duplexer(s) 1750/antenna switch(es) 1760, and transmitted through an antenna 1770.

Furthermore, in a reception path, the antenna 1770 receives signals from the outside and provides the received signals. The signals are routed by the antenna switch(es) 1760/duplexers 1750 and provided to a receiver 1720.

In the receiver 1720, the received signals are amplified by a low noise amplifier (LNA) 1723, filtered by a band pass filter 1724, and down-converted from the RF to the baseband by a mixer 1725.

The down-converted signal is filtered by a low pass filter (LPF) 1726 and amplified by a VGA 1727, thereby obtaining the analog input signal. The analog input signal is provided to the processor described in FIGS. 15 and 16.

Furthermore, a local oscillator (LO) 1740 generates transmission and reception LO signals and provides them to the mixer 1712 and the mixer 1725, respectively.

Furthermore, a phase locked loop (PLL) 1730 receives control information from the processor in order to generate transmission and reception LO signals in proper frequencies, and provides control signals to the local oscillator 1740.

Furthermore, the circuits shown in FIG. 17 may be arrayed differently from the configuration shown in FIG. 17.

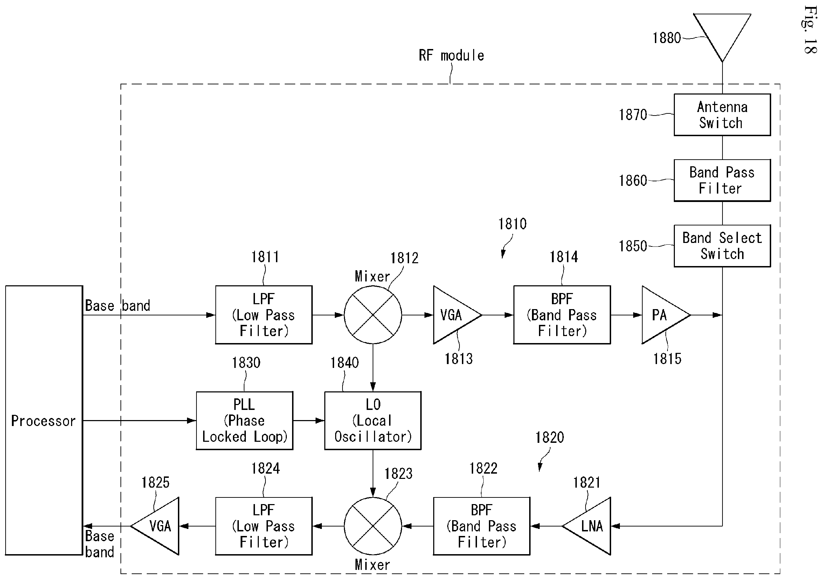

FIG. 18 is a diagram showing another example of the RF module of a wireless communication apparatus to which a method proposed in this specification may be applied.

Specifically, FIG. 18 shows an example of an RF module that may be implemented in a time division duplex (TDD) system.

The transmitter 1810 and receiver 1820 of the RF module in the TDD system have the same structure as the transmitter and receiver of the RF module in the FDD system.

Hereinafter, only a different structure between the RF module of the TDD system and the RF module of the FDD system is described. Reference is made to the description of FIG. 17 for the same structure.

A signal amplified by the power amplifier (PA) 1815 of the transmitter is routed through a band select switch 1850, a band pass filter (BPF) 1860 and an antenna switch(es) 1870 and is transmitted through an antenna 1880.

Furthermore, in a reception path, the antenna 1880 receives signals from the outside and provides the received signals. The signals are routed through the antenna switch(es) 1870, the band pass filter 1860 and the band select switch 1850 and are provided to the receiver 1820.

In the embodiments described above, the components and the features of the present invention are combined in a predetermined form. Each component or feature should be considered as an option unless otherwise expressly stated. Each component or feature may be implemented not to be associated with other components or features. Further, the embodiment of the present invention may be configured by associating some components and/or features. The order of the operations described in the embodiments of the present invention may be changed. Some components or features of any embodiment may be included in another embodiment or replaced with the component and the feature corresponding to another embodiment. It is apparent that the claims that are not expressly cited in the claims are combined to form an embodiment or be included in a new claim by an amendment after the application.

The embodiments of the present invention may be implemented by hardware, firmware, software, or combinations thereof. In the case of implementation by hardware, according to hardware implementation, the exemplary embodiment described herein may be implemented by using one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, and the like.

In the case of implementation by firmware or software, the embodiment of the present invention may be implemented in the form of a module, a procedure, a function, and the like to perform the functions or operations described above. A software code may be stored in the memory and executed by the processor. The memory may be positioned inside or outside the processor and may transmit and receive data to/from the processor by already various means.

It is apparent to those skilled in the art that the present invention may be embodied in other specific forms without departing from essential characteristics of the present invention. Accordingly, the aforementioned detailed description should not be construed as restrictive in all terms and should be exemplarily considered. The scope of the present invention should be determined by rational construing of the appended claims and all modifications within an equivalent scope of the present invention are included in the scope of the present invention

The scheme for transmitting and receiving channel state information in a wireless communication system of the present invention has been illustrated as being applied to a 3GPP LTE/LTE-A system, 5G system (new RAT system), but may be applied to various other wireless communication systems.

In accordance with an embodiment of the present invention, if a downlink bandwidth part for CSI reporting is fixed, but an uplink bandwidth part or numerology is changed, an operation of a user equipment can be efficiently controlled by changing a corresponding configuration value.

Furthermore, in accordance with an embodiment of the present invention, there is an effect in that the reporting of CSI can be efficiently performed by configuring a resource for the reporting of CSI for each bandwidth part.

Effects which may be obtained in this specification are not limited to the above-described effects, and other technical effects not described above may be evidently understood by a person having ordinary skill in the art to which the present invention pertains from the following description.

## Claims

**1.** A method for reporting channel state information (CSI) in a wireless communication system, the method comprising:

receiving first configuration information related to the reporting of the CSI from a base station; and
reporting the CSI to the base station based on the first configuration information,
wherein the first configuration information includes resource configuration information related to a physical uplink shared channel (PUCCH) resource for reporting the CSI, and
wherein the PUCCH resource is configured for each of at least one uplink bandwidth part (UL BWP).

**2.** The method of claim 1,
wherein the CSI is reported via the PUCCH resource in one activated UL BWP among the at least one UL BWP.

**3.** The method of claim 1,
wherein the first configuration information includes configuration values for reporting the CSI in one activated UL BWP among the at least one UL BWP, and
wherein the configuration values comprise at least one of a period or an offset.

**4.** The method of claim 3,
wherein at least one of the configuration values of periodic and/or semi-persistent reporting related to the CSI reporting of the one activated UL BWP or numerology is deactivated, when at least one of the one activated UL BWP or the numerology for the reporting of the CSI is changed.

**5.** The method of claim 4, further comprising:
receiving second configuration information including re-configuration values for the periodic and/or the semi-persistent reporting related to the CSI reporting of the one activated UL BWP or the numerology.

**6.** The method of claim 3,
wherein at least one of the configuration values of periodic and/or semi-persistent reporting related to the CSI reporting of the one activated UL BWP or numerology the CSI is configured to a predetermined value, when at least one of the one activated UL BWP or the numerology for the reporting of the CSI is changed.

**7.** The method of claim 3,
wherein the first configuration information includes a plurality of configuration values for each of the at least one UL BWP, and
wherein at least one of the configuration values of periodic and/or semi-persistent reporting related to the CSI reporting of the one activated UL BWP or numerology the CSI is configured according to the plurality of configuration values, when at least one of the one activated UL BWP or the numerology for the reporting of the CSI is changed.

**8.** A user equipment for reporting channel state information (CSI) in a wireless communication system, the user equipment comprising:

a radio frequency (RF) module transmitting and receiving a radio signal; and
a processor controlling the RF module,
wherein the processor is configured to

receive first configuration information related to the reporting of the CSI from a base station, and
report the CSI to the base station based on the first configuration information,
wherein the first configuration information includes resource configuration information related to a physical uplink shared channel (PUCCH) resource for reporting the CSI, and
wherein the PUCCH resource is configured for each of at least one uplink bandwidth part (UL BWP).

**9.** The method of claim 8,
wherein the CSI is reported via the PUCCH resource in one activated UL BWP among the at least one UL BWP.

**10.** The method of claim 8,
wherein the first configuration information includes configuration values for reporting the CSI in one activated UL BWP among the at least one UL BWP, and
wherein the configuration values comprise at least one of a period or an offset.

**11.** The method of claim 10,
wherein at least one of the configuration values of periodic and/or semi-persistent reporting related to the CSI reporting of the one activated UL BWP or numerology is deactivated, when at least one of the one activated UL BWP or the numerology for the reporting of the CSI is changed.

**12.** The method of claim 11,
wherein the processor is further configured to receive second configuration information including re-configuration values for the periodic and/or the semi-persistent reporting related to the CSI reporting of the one activated UL BWP or the numerology.

**13.** The method of claim 10,
wherein at least one of the configuration values of periodic and/or semi-persistent reporting related to the CSI reporting of the one activated UL BWP or numerology the CSI is configured to a predetermined value, when at least one of the one activated UL BWP or the numerology for the reporting of the CSI is changed.

**14.** The method of claim 10,
wherein the first configuration information includes a plurality of configuration values for each of the at least one UL BWP, and
wherein at least one of the configuration values of periodic and/or semi-persistent reporting related to the CSI reporting of the one activated UL BWP or numerology is configured according to the plurality of configuration values, when at least one of the one activated UL BWP or the numerology for the reporting of the CSI is changed.

**15.** A base station for reporting channel state information (CSI) in a wireless communication system, the base station comprising:

a radio frequency (RF) module transmitting and receiving a radio signal; and
a processor controlling the RF module,
wherein the processor is configured to
transmit first configuration information related to the reporting of the CSI from a base station, and
receive the CSI to the base station based on the first configuration information,
wherein the first configuration information includes resource configuration information related to a physical uplink shared channel (PUCCH) resource for reporting the CSI, and
wherein the PUCCH resource is configured for each of at least one uplink bandwidth part (UL BWP).

NGC
AMF/UPF
AMF/UPF
NG-C/U
NG-C/U
NG-C/U
NG-C/U
Xn
Xn
Xn
gNB
gNB
gNB
NG-RAN

Fig. 2

Downlink frame i
Uplink frame i
$N_{TA}T_s$

Fig. 3

One subframe
14·2^μ OFDM symbol
k = N^μ_RB N^RB_SC -1
Resource block
Resource element
-In case of resource grid, (k, l̄)
-In case of resource block, (k, l)
N^μ_RB N^RB_SC -1 Subcarrier
N^RB_SC Subcarrier
k = 0
l = 0
l = 14·2^μ-1

Fig. 4

Downlink dedicated or uplink dedicated
Resource block index
Frequency
5
4
3
2
1
0
0 1 2 3 4 5 6 7 8 9 10 11 12 13
Symbol index
One TTI
Downlink control channel
Uplink control channel

Fig. 5

(a)

w
W1
W2
W3
W4
TXRU
m'=1
x
K
q
M
TXRU
m'=2
M antenna elements

(b)

w
$W_{1,1}$
TXRU
m'=1
x
q
M
TXRU
m'=2
M antenna elements

Fig. 6

Digital BF
TXRU
TXRU
TXRU
Analog BF
1
2
L
1
2
N
1
2
N
1
2
M

Fig. 7

Subframe
Symbol
0 1 2 3 4 5 6 7 8 9 10 11 12 13
Freq.
Synchronization signal
Resource block
BRS
R0
R1
R2
R3
R4
R5
R6
R7
Rx:Resource for antenna port X
xPBCH
DM-RS for xPBCH

Fig. 8

M
N
Mg
Ng

Fig. 9

UE
BS
S9010
CSI related setting information
S9022
Receive CSI-RS
S9024
S9020
Calculate CSI
S9030
Report CSI

Fig. 10

1010
1020
Part 1:CRI/RI/CQI1/NZBI
Part 2 : PMI/CQI2

Fig. 11

Total payload
CRI/RI=1
PMI/CQI
CRI/RI=2
PMI/CQI
Zero padding bits

Fig. 12

1210
1220
Part 1:CRI/RI/CQI1
Part 2 : PMI/CQI2

Fig. 13

Start
Receive first configuration information related to reporting of CSI from base station
S13010
Report CSI to base station based on first configuration information
S13020
End

Fig. 14

Start
Transmit configuration information related to reporting of CSI to user equipment
S14010
Receive CSI from user equipment
S14020
End

Fig. 15

1510
1511
1513
BASE STATION(eNB)
Processor
RF unit
Memory
1512

1520
1521
1523
UE
Processor
RF unit
Memory
1522

Fig. 16

1640
1635
1605
1655
Receiver
Power
Management
Module
Battery
RF Module
Transmitter
1610
1615
Display
DSP/
Microprocessor
1620
Keypad
Flash Memory
ROM, SRAM
SIM Card
1650
1645
1630
1625

Fig. 17

1770
Antenna Switch
1760
Duplexer
1750
PA
1715
BPF (Band Pass Filter)
1714
1710
RF module
VGA
1713
Mixer
1712
LO (Local Oscillator)
1740
LPF (Low Pass Filter)
1711
PLL (Phase Locked Loop)
1730
Base band
Processor
LNA
1723
1720
BPF (Band Pass Filter)
1724
1725
Mixer
LPF (Low Pass Filter)
1726
VGA
1727
Base band

Fig. 18

RF module
1880
Antenna Switch
1870
Band Pass Filter
1860
Band Select Switch
1850
PA
1815
BPF (Band Pass Filter)
1814
1810
VGA
1813
Mixer
1812
LPF (Low Pass Filter)
1811
Base band
LO (Local Oscillator)
1840
PLL (Phase Locked Loop)
1830
LNA
1821
1820
BPF (Band Pass Filter)
1822
Mixer
1823
LPF (Low Pass Filter)
1824
VGA
1825
Base band
Processor

**INTERNATIONAL SEARCH REPORT**

International application No.
**PCT/KR2018/016745**

A. CLASSIFICATION OF SUBJECT MATTER

***H04B 7/06(2006.01)i, H04W 24/10(2009.01)i, H04W 72/04(2009.01)i, H04L 5/00(2006.01)i***

According to International Patent Classification (IPC) or to both national classification and IPC

B. FIELDS SEARCHED

Minimum documentation searched (classification system followed by classification symbols)
H04B 7/06; H04B 7/0456; H04L 5/00; H04W 72/04; H04W 24/10

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: CSI reporting configuration information, PUCCH resource, uplink bandwidth part

C. DOCUMENTS CONSIDERED TO BE RELEVANT

| Category* | Citation of document, with indication, where appropriate, of the relevant passages | Relevant to claim No. |
|---|---|---|
| Y | US 2014-0286296 A1 (NOKIA SOLUTIONS AND NETWORKS OY.) 25 September 2014 See paragraphs [0028]-[0049]; and figure 1. | 1-15 |
| Y | ERICSSON. Summary of views on CSI reporting. R1-1721451. 3GPP TSG RAN WG1 Meeting #91. Reno. USA. 29 November 2017 See sections 2-2.5. | 1-15 |
| Y | SAMSUNG. PUCCH resource configuration for bandwidth restricted UE. R1-1717661. 3GPP TSG RAN WG1 Meeting 90bis. Prague. CZ. 03 October 2017 See section 2. | 2,9 |
| Y | INTERDIGITAL, INC. Details of BWP switching operation. R1-1720556. 3GPP TSG RAN WG1 Meeting #91. Reno. USA. 18 November 2017 See sections 2-3. | 5,12 |
| A | KR 10-2017-0137044 A (SAMSUNG ELECTRONICS CO., LTD.) 12 December 2017 See paragraphs [0144]-[0152]; and figures 13-15. | 1-15 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 18 APRIL 2019 (18.04.2019) | **19 APRIL 2019 (19.04.2019)** |

Name and mailing address of the ISA/KR
Korean Intellectual Property Office
Government Complex Daejeon Building 4, 189, Cheongsa-ro, Seo-gu, Daejeon, 35208, Republic of Korea
Facsimile No. +82-42-481-8578

Authorized officer

Telephone No.

Form PCT/ISA/210 (second sheet) (January 2015)

**INTERNATIONAL SEARCH REPORT**
Information on patent family members

International application No.
**PCT/KR2018/016745**

| Patent document cited in search report | Publication date | Patent family member | Publication date |
|---|---|---|---|
| US 2014-0286296 A1 | 25/09/2014 | EP 2777205 A1 | 17/09/2014 |
| | | US 9743389 B2 | 22/08/2017 |
| | | WO 2013-068386 A1 | 16/05/2013 |
| KR 10-2017-0137044 A | 12/12/2017 | CN 107210794 A | 26/09/2017 |
| | | EP 3251280 A1 | 06/12/2017 |
| | | US 2016-0226649 A1 | 04/08/2016 |
| | | US 2019-0089512 A1 | 21/03/2019 |
| | | WO 2016-122252 A1 | 04/08/2016 |

Form PCT/ISA/210 (patent family annex) (January 2015)